(19) Europäisches Patentamt
European Patent Office
Office européen des brevets

(11) EP 2 985 854 A1

(12) EUROPEAN PATENT APPLICATION
published in accordance with Art. 153(4) EPC

(43) Date of publication:
17.02.2016 Bulletin 2016/07

(51) Int Cl.:
H02J 7/00 (2006.01)        H01M 10/42 (2006.01)
H01M 10/44 (2006.01)       H02J 7/04 (2006.01)

(21) Application number: 14783427.9

(22) Date of filing: 07.02.2014

(86) International application number:
PCT/JP2014/052914

(87) International publication number:
WO 2014/167889 (16.10.2014 Gazette 2014/42)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 11.04.2013 JP 2013082882

(71) Applicant: Sony Corporation
Tokyo 108-0075 (JP)

(72) Inventors:
• ARASHIMA, Kenji
Tokyo 108-0075 (JP)
• KONYA, Satoshi
Tokyo 108-0075 (JP)

(74) Representative: D Young & Co LLP
120 Holborn
London EC1N 2DY (GB)

(54) BATTERY DEVICE

(57)    Provided is a battery apparatus including a battery, a communication unit configured to communicate with an external device, and a controller configured to control an operation of the battery based on control information pertaining to an operation specification of the battery, the control information being acquired based on a communication performed by the communication unit..

FIG. 1

**Description**

Technical Field

The present disclosure relates to a battery apparatus.

Background Art

Batteries capable of charging and discharging, such as lithium-ion batteries, are used in devices including electric automobiles, motor-assisted bicycles, and electric tools. In some of such batteries, to prevent overcharging or over-discharging, the state in a battery is monitored, and the charging or discharging is stopped upon detection of any abnormality.

Citation List

Patent Literature

Patent Literature 1: JP 5039980B

Summary of Invention

Technical Problem

In addition to the ability to detect any abnormal state of a battery, there is a demand for an operation to change easily an operation specification of a battery depending on the situations. On the other hand, Patent Literature 1 discloses a configuration in which a battery controller connected to a battery controls a battery operation from the outside. However, in the invention disclosed in Patent Literature 1, an external device such as the battery controller is necessary to be provided to control a battery operation, and thus it is difficult to control a battery operation in the existing device.

Therefore, according to an embodiment of the present disclosure, there is provided a novel and improved battery apparatus capable of changing an operation specification of a battery.

Solution to Problem

According to the present disclosure, there is provided a battery apparatus including: a battery; a communication unit configured to communicate with an external device; and a controller configured to control an operation of the battery based on control information pertaining to an operation specification of the battery, the control information being acquired based on a communication performed by the communication unit.

Advantageous Effects of Invention

According to the embodiment of the present disclosure described above, the battery apparatus capable of changing the operation specification of the battery is provided.

Brief Description of Drawings

[FIG. 1] FIG. 1 is a schematic diagram illustrating the configuration of a battery apparatus according to a first embodiment of the present disclosure.
[FIG. 2] FIG. 2 is a circuit diagram illustrating an exemplary circuit configuration of the battery apparatus according to the first embodiment.
[FIG. 3] FIG. 3 is a circuit diagram illustrating an exemplary circuit configuration of an RFID tag according to the first embodiment.
[FIG. 4] FIG. 4 is a schematic diagram illustrating the configuration of a user terminal according to the first embodiment.
[FIG. 5] FIG. 5 is a circuit diagram illustrating an exemplary circuit configuration of an RFID reader-writer according to the first embodiment.
[FIG. 6] FIG. 6 is a schematic diagram illustrating the configuration of a battery apparatus according to a second embodiment of the present disclosure.
[FIG. 7] FIG. 7 is a diagram illustrating an exemplary configuration in which the battery apparatus according to the second embodiment communicates with a user terminal.
[FIG. 8] FIG. 8 is a circuit diagram illustrating an exemplary circuit configuration of a coupling circuit (filter).
[FIG. 9] FIG. 9 is a circuit diagram illustrating an exemplary circuit configuration of an RFID tag according to the second embodiment.
[FIG. 10] FIG. 10 is a circuit diagram illustrating an exemplary circuit configuration of an RFID tag according to the second embodiment.
[FIG. 11] FIG. 11 is a circuit diagram illustrating an exemplary circuit configuration of an RFID reader-writer according to a modification of the second embodiment.
[FIG. 12] FIG. 12 is a circuit diagram illustrating an exemplary circuit configuration of an RFID reader-writer according to a modification of the second embodiment.
[FIG. 13] FIG. 13 is a schematic diagram illustrating the configuration of a battery apparatus according to a third embodiment of the present disclosure.
[FIG. 14] FIG. 14 is a circuit diagram illustrating an exemplary circuit configuration of the battery apparatus according to the third embodiment.
[FIG. 15] FIG. 15 is a flowchart illustrating a series of operations of a battery apparatus according to Example 1 of the present disclosure.

[FIG. 16] FIG. 16 is a flowchart illustrating a series of operations of a battery apparatus according to Example 2 of the present disclosure.

[FIG. 17] FIG. 17 is a flowchart illustrating a series of operations of a battery apparatus according to Example 3 of the present disclosure.

[FIG. 18] FIG. 18 is a flowchart illustrating a series of operations of a battery apparatus according to Example 6 of the present disclosure.

Description of Embodiments

Hereinafter, preferred embodiments of the present disclosure will be described in detail with reference to the appended drawings. Note that, in this specification and the drawings, elements that have substantially the same function and structure are denoted with the same reference signs, and repeated explanation is omitted.

The description will be given in the following order.

1. First Embodiment

1.1. Schematic Configuration of Battery Apparatus
1.2. Circuit Configuration of Battery Apparatus
1.3. Schematic Configuration of User Terminal
1.4. Circuit Configuration of RFID Reader-Writer
1.5. Conclusion

2. Second Embodiment

2.1. Schematic Configuration of Battery Apparatus
2.2. Circuit Configuration of RFID tag and Coupling Circuit
2.3. Modification
2.4. Conclusion

3. Third Embodiment

3.1. Configuration of Battery Apparatus
3.2. Conclusion

4. Example 1 (example of application to battery for motor-assisted bicycle)
5. Example 2 (example of application to battery for electric motorcycle)
6. Example 3 (example of application to electric cart)
7. Example 4 (example of control relating to output of battery information)
8. Example 5 (example of battery output control)
9. Example 6 (example of charging control)
10. Example 7 (example of control to limit type of devices available)
11. Example 8 (example of application to automotive battery)
12. Example 9 (example of estimating and specifying driven device)
13. Example 10 (example of estimating and specifying contents of work)

<1. First Embodiment>

[1.1. Schematic Configuration of Battery Apparatus]

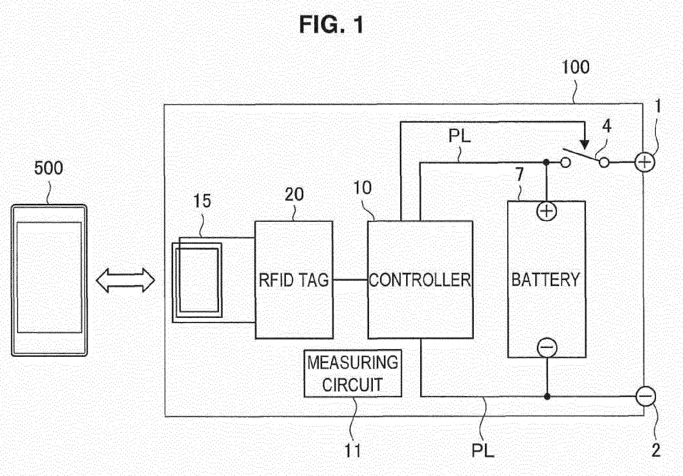

The schematic configuration of a battery apparatus 100 according to a first embodiment of the present disclosure will be described with reference to FIG. 1. FIG. 1 is a schematic diagram illustrating the configuration of the battery apparatus 100 according to the first embodiment. The battery apparatus 100 according to the present embodiment may be attached to a charger to perform charging to a battery 7. In this case, the positive terminal 1 and the negative terminal 2 provided at both end of a power line PL are connected to a positive terminal and a negative terminal of the charger, respectively, and the charging is performed via the power line PL. When electrical equipment is used, as is the case with the charging, the positive terminal 1 and the negative terminal 2 are respectively connected to a positive terminal and a negative terminal of the electrical equipment, and discharging is performed via the power line PL.

As shown in FIG. 1, the battery apparatus 100 according to the present embodiment is configured to include the battery 7, a controller 10, a measuring circuit 11, a switch circuit 4, an RFID tag 20, and an antenna 15, as main components.

The controller 10 is configured to include an arithmetic and logic circuit such as a central processing unit (CPU) and a battery management unit (BMU), and controls operations of respective units in the battery apparatus 100. The controller 10 is configured to communicate with a user terminal 500, which may be an external device, via the RFID tag 20 and the antenna 15. The RFID tag 20 is an example of a communication device that employs wireless communication technology such as near field communication (NFC)-based communication technology and radio frequency identification (RFID) technology.

The controller 10 acquires control information pertaining to an operation specification of the battery 7 from the user terminal 50 via the RFID tag 20 and the antenna 15. The controller 10 updates control data to control each component in the battery apparatus 100 based on the obtained control information, thereby changing an operation specification of the battery apparatus 100. The control data is assumed to be updated, for example, when control data is first set or when the set control data is updated. The control information pertaining to the operation specification of the battery 7 may include control data itself or may include information used to generate the control data. In other words, the controller 10 may update the control data by using information included in the control information or may update the control data by using data generated based on the information included in the obtained control information. The information included in the control information may be information relating to a condition that allows the operation specification of the battery 7 to be controlled, in addition to information that directly relates to an operation of the battery 7. Thus, in the following description, the expression "control data is updated based on control information" may indicate a case in which the controller 10 updates control data using information included in the control information or may indicate a case in which the controller 10 updates control data using data generated based on information included in the obtained control information. In addition, the expression "operation is performed based on control information" may indicate a case in which the controller 10 operates based on control data that is directly obtained as control information or may indicate a case the controller 10 generates control data based on the obtained control information and operates based on the generated control data. Furthermore, in the following description, the transmission and reception of information between the controller 10 according to the present embodiment and the user terminal 500 may indicate that data is transmitted and received via the RFID tag 20 and the antenna 15, unless otherwise stated.

The control information from the user terminal 500 may include information relating to discharging from the battery 7. A specific example of information relating to discharging includes information used to control at least one of start and stop of discharging from the battery 7. The information used to control at least one of start and stop of discharging from the battery 7 may be control data used to control the switch circuit 4 or may be information (e.g., a control parameter) used to generate control data. The controller 10 controls the switch circuit 4 based on the obtained control information so that the battery 7 performs at least one of start and stop of discharging. The switch circuit 4 controls the battery 7 to be switched into at least one of discharging from the battery 7 and discharging to the battery 7. The switch circuit 4 will be described in detail later.

An example of the information relating to discharging include information relating to a control condition that allows at least one of start and stop of discharging of the battery 7 to be performed. As a specific example, the control information may include information relating to a discharging time. In this case, the controller 10 may update the control data so that discharging of the battery 7 is stopped after the discharging of the battery 7 is started and then the discharging time included in the control information is elapsed.

An example of the information relating to discharging includes information that relates to an upper limit of electric current to be outputted from the battery 7. In this case, the controller 10 may update the control data based on the obtained control information to control the electric current outputted from the battery 7. The example described above is merely an illustration, and the kinds of information and contents of control corresponding to the information are not particularly limited as long as the information is related to discharging from the battery 7.

An example of the control information from the user terminal 500 includes information relating to charging to the battery 7. A specific example of the information relating to charging includes information used to control at least one of start and stop of charging to the battery 7. In this case, the controller 10 controls the switch circuit 4 based on the obtained control information so that the battery 7 performs at least one of start and stop operations of charging.

An example of the information relating to charging include information relating to a control condition that allows at least one of start and stop of charging to the battery 7 to be performed. As a specific example, the control information may include information relating to a charging time. In this case, the controller 10 may update the control data so that charging to the battery 7 is stopped after charging to the battery 7 is started and then the charging time included in the control information is elapsed.

An example of the information relating to charging includes information that relates to an upper limit of electric current charged to the battery 7. In this case, the controller 10 may update the control data based on the obtained control information to control the charging electric current charged to the battery 7. The examples described above are merely an example, and the kinds of information and contents of control corresponding to the information are not particularly limited as long as the information is related to charging to the battery 7.

An example of the information relating to charging and discharging includes information a charging pause voltage and a discharging pause voltage of the battery 7. In general, when a charging pause voltage is high and a discharging pause voltage is low, there is a tendency that available capacity of a battery increases but the charging or discharging frequency reduces. A battery has an inverse relationship between capacity and lifetime depending on a range of charging or discharging. Thus, in some cases, the range of charging or discharging varies according to the purpose of use. The controller 10 may be configured to estimate the usage of the battery 7 and to change the range of charging or discharging based on a result obtained by estimation and information relating to the charging pause voltage and the discharging pause voltage.

As a specific example, the information relating to the charging pause voltage and the discharging pause voltage may include information used to estimate the usage of the battery 7 and information indicating the relationship between the usage and the range of charging or discharging. An example of the information used to estimate the usage include charging frequency, discharging frequency, charging time, discharging time, charging end voltage, discharging end voltage, average voltage, temperature at charging, and temperature at discharging. The controller 10 may estimate the usage of the battery 7 based on the information used to estimate the usage described above and may change the range of charging or discharging depending on the estimation result. The range of charging or discharging may be previously set depending on the usage, such as a range of 100 to 20% for a case where the drive time is regarded as important, a range of 70 to 30% for a case where the charging cycle lifetime is regarded as important, and a range of 70 to 0% for a case where deterioration due to long term storage is prevented. The controller 10 may change (optimization) settings of a single battery 7 based on the information of the single battery 7. In addition, the controller 10 may perform statistical analysis based on the information of a plurality of battery cells 7 to change (total optimization) the setting of the plurality of battery cells 7 depending on the analysis result.

The information included in the control information from the user terminal 500 may be information relating to a condition that allows the operation specification of the battery 7 to be controlled, in addition to the information that directly relates to the operation of the battery 7.

An example of the control information from the user terminal 500 includes a result obtained by authenticating the user who uses the battery apparatus 100. In this case, the controller 10 may discriminate between users based on the obtained authentication result and may decide the specification of the battery 7 depending on the discrimination result. As a specific example, the controller 10 may determine whether the authenticated user is authorized to use the battery apparatus 100 based on the obtained authentication result. When the user is not authorized, the controller 10 may prevent (stop) the battery 7 from being charged or discharged.

As another example, the controller 10 may specify the age of the authenticated user based on the obtained authentication result to control the upper limit of electric current outputted from the battery 7 depending on the specified age. With such a configuration, an electric current of the battery 7 is limited to be outputted when the user is a child for the purpose of safety, and the limitation on the electric current outputted from the battery 7 is released when the user is an adult.

The control information from the user terminal 500 may include authentication information used to authenticate the user who uses the battery apparatus 100. An example of the authentication information includes an ID for identifying the user and a password for authenticating the user indicated by the ID. In this case, the controller 10 may authenticate the user based on the obtained authentication information to discriminate between users based on the authentication result. The authentication information described above is merely an example, and the type and format of the authentication information are not limited. After the user is discriminated, the controller 10 may be operated in a similar way to the case in which the authentication result of the user is obtained.

As another example, the control information from the user terminal 500 may include position information indicative of the position of the battery apparatus 100. In this case, the controller 10 may decide the operation specification of the battery 7 based on the obtained position information. As a specific example, the controller 10 discriminates whether the obtained position information is related to the location such as a public road with speed regulation or the obtained position information is related to the closed environment such as a racetrack with no speed regulation. When the discriminated environment is a location with speed regulation depending on the discrimination result obtained based on the position information, the controller 10 may cause the output power of the battery 7 to be limited. On the other hand, when the environment is a location with no speed regulation, the controller 10 may cause the limitation on the output power of the battery 7 to be released.

The control information from the user terminal 500 may include information that is used to limit a discharging operation from the battery 7 or a charging operation to the battery 7 in detail.

As a specific example, the control information may include information indicative of an amount of discharging that indicates the amount of power to be discharged and the discharging time when the power is discharged. For example, when the controller 10 acquires information indicative of an amount of discharging from the user terminal 500, the controller 10 may allow discharging from the battery 7 to be stopped on the condition that the amount of power discharged from the battery 7 reaches the obtained amount of discharging. When the controller 10 acquires information indicative of the discharging time from the user terminal 500, the controller 10 may allow discharging from the battery 7 to be stopped on the condition that the time elapsed from start of discharging of the battery 7 reaches the discharging time. This is similarly applicable to charging to the battery 7.

The kinds of information included in the control information and operations of the controller 10 depending on each type of the information will be described later as an example. The example described above is merely an example. The kinds of information included in the control information and operations of the controller 10 depending on each type of the information are not limited as long as the controller 10 is able to control the operation of each component in the battery apparatus 100 based on the control information obtained from the user terminal 500.

The controller 10 stores information relating to the battery 7 and information relating to a connection device that is connected to the battery 7, and outputs the stored information to the user terminal 500 that is an external device via the RFID tag 20 and the antenna 15.

For example, the controller 10 may store a measured value outputted from the measuring circuit 11 that measures a current value or voltage value of the output from the battery 7, and may output the stored measured value to the user terminal 500. As a specific example, the controller 10 may store the current value or voltage value of the battery 7 at predetermined time intervals, and may output the current value or voltage value for each time to the user terminal 500. The controller 10 may acquire and store an electric current charged to the battery 7 from the measuring circuit 11, and may output a current value of the stored charging electric current to the user terminal 500. Each measured value that is outputted from the controller 10 can be checked by the user terminal 500, and thus it is possible for the user using the battery apparatus 100 to check the state of use or the state of charging of the battery 7.

[1.2. Circuit Configuration of Battery Apparatus]

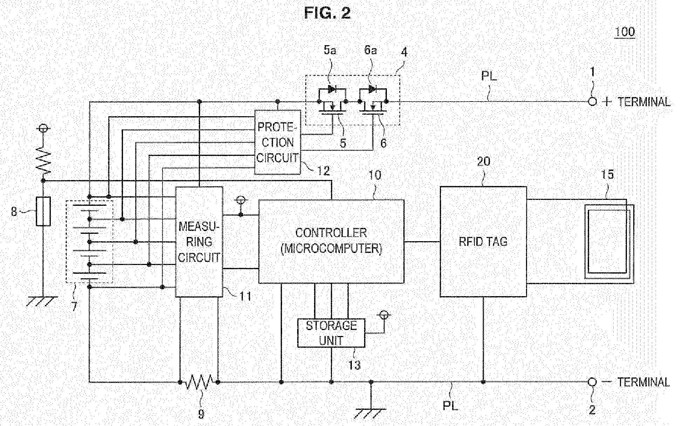

The circuit configuration of the battery apparatus according to the present embodiment will be described with reference to FIG. 2. FIG. 2 is a circuit diagram illustrating an exemplary circuit configuration of the battery apparatus according to the present embodiment.

(Battery 7)

The battery 7 may be a secondary battery such as a lithium-ion battery and may have a configuration in which a plurality of secondary batteries are connected in series.

(Controller [microcomputer] 10)

The controller (microcomputer) 10 measures a current value and accumulates power by using a voltage value and current value inputted from the measuring circuit 11. The battery temperature is monitored by a temperature sensing element 8 (e.g., thermistor). The measured values or the like are stored in a storage unit 13. The storage unit 13 may be configured to include a nonvolatile memory such as electrically erasable programmable read-only memory (EEPROM). The storage unit 13 stores control data (e.g., control parameter) used to control the operation of each unit in the controller 10 and stores measured values outputted from the measuring circuit 11. The measuring circuit 11 will be described in detail later.

The controller 10 may obtain voltage, current, and temperature values from the measuring circuit 11 at every predetermined timing and may cause the storage unit 13 to store the obtained values.

The controller 10 may obtain information from an external device (e.g., the user terminal 500) via the RFID tag 20 and the antenna 15, and may cause the storage unit 13 to store the obtained information. This makes it possible for the controller 10 to rewrite (update) the control data that is stored in the storage unit 13 and is used to control its own operation (or, operation of the controller 10), thereby changing the specification (e.g., specification for charging and discharging) relating to its own operation.

The controller 10 may obtain information relating to a connection device that is connected to the battery 7 and may cause the storage unit 13 to store the obtained information. The way for the controller 10 to obtain the information relating to the connected device is not particularly limited. As a specific example, the controller 10 may obtain the information relating to a connection device via a leased line (e.g., a serial cable not shown) used to transfer information between the controller 10 and the connection device and may cause the storage unit 13 to store the obtained information.

(Measuring Circuit 11)

The measuring circuit 11 acquires (measures) the information relating to the battery 7, which is used for the controller 10 to monitor the state of the battery 7. For example, the measuring circuit 11 measures a voltage of each cell of the battery 7 in the battery apparatus 100 and supplies the measured value to the controller 10. The amount and direction of electric current are measured using a current sensing resistor 9, and the measured values are supplied to the controller 10. The measured temperature data is supplied to the controller 10. Additionally, the measuring circuit 11 functions as a regulator that stabilizes a voltage of the battery 7 and generates a power supply voltage.

(Protection Circuit 12)

A protection circuit 12 prevents the battery 7 from being overcharged or over-discharged by sending a control signal to the switch circuit 4 when any cell in the battery 7 has a voltage value detected as being overcharged or when the battery 7 has a voltage value less than or equal to a voltage detected as being over-discharged. In this case, when a lithium-ion battery is used, a voltage value detected as being overcharged may be defined as 4.2 V $\pm$ 0.5 V, and a voltage value detected as being over-discharged may be defined as 2.4 V $\pm$ 0.1 V.

The protection circuit 12 may send the control signal supplied from the controller 10 to the switch circuit 4, which selects at least one of discharging from the battery 7 and charging to the battery 7, thereby controlling the battery 7 based on the control signal.

(Switch Circuit 4)

The switch circuit 4 is configured to include a charging control field effect transistor (FET) 5 and a discharging control FET 6. When the charging from the battery 7 is limited (e.g., when a voltage of the battery is detected as being overcharged), the charging control FET 5 is set to OFF to prevent the charging current from flowing. After the charging control FET 5 is in the OFF state, only discharging via a parasitic diode 5a is possible.

When the discharging to the battery 7 is limited, (e.g., when a voltage of the battery is detected as being over-discharged), the charging control FET 6 is set to OFF to prevent the discharging current from flowing. After the charging control FET 6 is in the OFF state, only charging via a parasitic diode 6a is possible.

(RFID Tag 20 and Antenna 15)

The controller 10 according to the present embodiment is configured to communicate with an external device (e.g., the user terminal 500) via the RFID tag 20 and the antenna 15. The RFID tag 20 is an example of a communication device that employs wireless communication technology such as NFC-based communication technology and RFID technology. The RFID tag 20 decodes a high frequency signal received through the antenna 15 from an external device and outputs the decoded information to the controller 10. The RFID tag 20 acquires information from the controller 10 and controls load modulation based on the obtained information. Thus, the RFID tag 20 generates a high frequency to be responded to the external device and transmits the generated high frequency signal to the external device via the antenna 15. This configuration allows the information obtained from an external device to be stored in the storage unit 13 or allows the information stored in the storage unit 13 to be outputted to the external device.

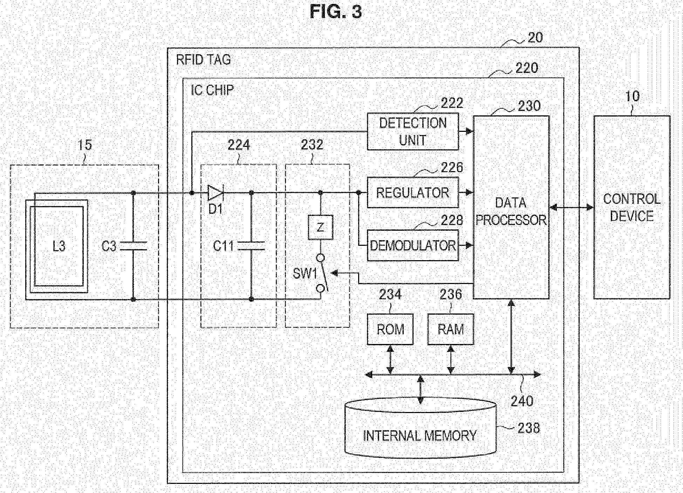

Referring to FIG. 3, the circuit configuration of the RFID tag 20 will be described in detail. FIG. 3 is a circuit diagram illustrating an exemplary circuit configuration of the RFID tag 20 according to the present embodiment. In the example of FIG. 3, the antenna 15 is illustrated as well.

The antenna 15 transmits a carrier wave corresponding to the high frequency signal transferred from the RFID tag 20. The antenna 15 receives the high frequency signal transmitted by load modulation from an external device (e.g., the user terminal 500). In other words, the antenna 15 transmits and receives signals in a non-contact manner to and from an external device.

The antenna 15 has a parallel resonant circuit that includes an inductor L3 having predetermined inductance and a capacitor C3 (capacitive element) having predetermined capacitance. The capacitor C3 is connected in parallel with the inductor L3. In the example shown in FIG. 3, the inductor L3 is illustrated as an example of a loop antenna.

When the antenna 15 is configured to include the parallel resonant circuit shown in FIG. 3, the impedance of the antenna 15 varies between when an external device such as a smartphone equipped with IC card or IC chip is within a communication coverage range (e.g., when the user terminal 500 serving as an external device is covered by the antenna 15) and when an external device is out of the communication coverage range. In other words, on the assumption that the antenna 15 is configured to include the parallel resonant circuit shown in FIG. 3, when an external device is out of the communication coverage range, the parallel resonant circuit is in an open state and thus the high frequency signal from the RFID tag 20 is prevented from being transferred to the antenna 15. On the other hand, when the external device is in the communication coverage range, the antenna 15 and an antenna circuit included in the external device are connected to each other and the load is applied. Thus, the high frequency signal from the RFID tag 20 is transferred to the antenna 15, and the antenna 15 transmits a carrier wave corresponding to the high frequency signal.

The resonance frequency in the parallel resonant circuit that constitutes the antenna 15 may be set to the frequency of the high frequency signal. Specifically, the inductance value L of the inductor L3 and the capacitance value C of the capacitor C3 are set to satisfy the following Equation (1). In Equation (1), f is the frequency of the high frequency signal, such as 13.56 [MHz].

[Math 1]

$$2\pi f = \frac{1}{\sqrt{LC}}$$

$$\cdot \ \cdot \ \cdot \ (\text{Equation 1})$$

The RFID tag 20 is configured to include an IC chip 220 that decodes the received high frequency signal and transmits a response signal by load modulation. The RFID tag 20 according to the present embodiment may not be provided with each component that constitutes the IC chip 220 shown in FIG. 3 in the form of IC chip.

The IC chip 220 is configured to include a detection unit 222, a detector 224, a regulator 226, a demodulator 228, a data processor 230, and a load modulator 232. Although not shown in FIG. 3, the IC chip 220 may further include a protection circuit (not shown) that prevents overvoltage or overcurrent from being applied to the data processor 230. An example of the protection circuit (not shown) includes a clamper composed of a diode or the like.

Additionally, the IC chip 220 is configured to include a ROM 234, a RAM 236, and an internal memory 238. The data processor 230 is connected to the ROM 234, the RAM 236, and the internal memory 238 via a bus 240 that may function as a data transmission path.

The ROM 234 stores data for control, such as a program and operation parameter, used by the data processor 230. The RAM 236 temporarily stores a program executed by the data processor 230, operation results, running state, or the like.

The internal memory 238 is a storage means provided in the IC chip 220 and is tamper resistant. The data processor 230 reads data in the internal memory 238, newly writes data in the internal memory, and updates data. The internal memory 238 may store various types of data, such as applications, used to operate the data processor 230.

The detection unit 222 generates a square-wave detection signal based on the high frequency signal and transfers the detection signal to the data processor 230. The data processor 230 uses the transferred detection signal, for example, as a processing clock for the data processing. The detection signal is based on the high frequency signal transmitted from an external device (e.g., the user terminal 500), and thus the detection signal is to be synchronized with the frequency of the high frequency signal. The IC chip 220 is provided with the detection unit 222, and thus the processing between the IC chip 220 and an external device can be performed in synchronization with the external device.

The detector 224 rectifies the voltage corresponding to the received high frequency signal (hereinafter, also referred to as "reception voltage"). The detector 224 may be configured to include a diode D1 and a capacitor C11, but the configuration of the detector 224 is not limited thereto.

The regulator 226 smooths the reception voltage to make the voltage constant, and outputs a driving voltage to the data processor 230. The regulator 226 may use the direct-current component of the reception voltage as the driving voltage.

The demodulator 228 demodulates the high frequency signal based on the reception voltage and outputs data corresponding to the high frequency signal (e.g., binary data signals of high and low levels). The demodulator 228 may output the alternating-current signal of the reception voltage as the data.

The data processor 230 is driven by using the driving voltage outputted from the regulator 226 as a power supply, and outputs the data demodulated in the demodulator 228 to the controller 10. The data processor 230 may be configured to include a CPU or a micro processing unit (MPU), but the configuration of the data processor 230 is not limited thereto.

The data processor 230 acquires data that is to be transmitted from the controller 10 to an external device. The data processor 230 generates a control signal that controls load modulation to be responded to the external device based on the data acquired from the controller 10. Then, the data processor 230 selectively outputs the control signal to the load modulator 232.

The load modulator 232 may be configured to include a load Z and a switch SW1. The load modulator 232 performs load modulation by selectively connecting (activating) the load Z depending on the control signal transferred from the data processor 230. The load Z may be configured to include a resistor having a predetermined resistance value, but the configuration of the load Z is not limited thereto. The switch SW1 may be configured to include a p-channel MOSFET or n-channel MOSFET, but the configuration of the switch SW1 is not limited thereto.

The IC chip 220, which has the configuration shown in FIG. 3, processes the received high frequency signal and transmits the response signal by load modulation with the response signal superimposed on the power line. The configuration of the IC chip 220 according to the first embodiment is not limited to the configuration shown in FIG. 3.

The RFID tag 20 having the configuration shown in FIG. 3 is driven by the power obtained from the received high frequency signal and performs a process indicated by the received high frequency signal, thereby transmitting the response signal corresponding to the process by load modulation.

[1.3. Schematic Configuration of User Terminal]

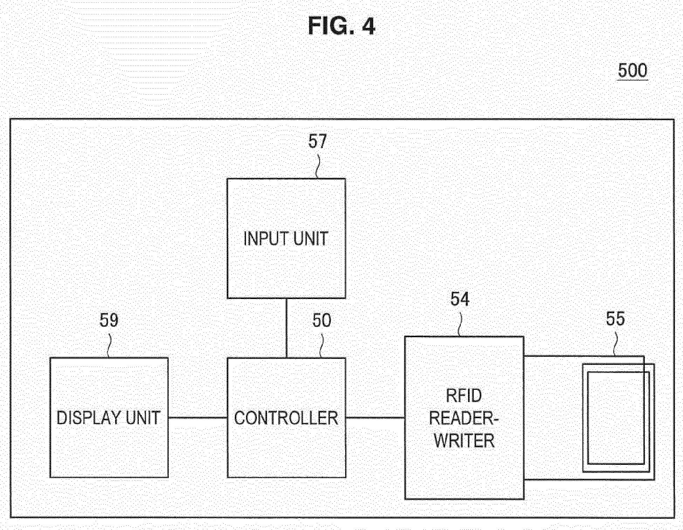

The user terminal 500 that is an external device will be described. The user terminal 500 is configured to operate as the RFID reader-writer, thereby communicating with the battery apparatus 100 in a non-contact manner. This configuration allows the user terminal 500 to transmit information to the battery apparatus 100, and thus it is possible to change the specification relating to the operation of the battery apparatus 100. The user terminal 500 is able to read the information stored in the battery apparatus 100. The schematic configuration of the user terminal 500 in the battery apparatus 100 will be described with reference to FIG. 4. FIG. 4 is a schematic diagram illustrating the configuration of the user terminal 500 according to the present embodiment.

As shown in FIG. 4, the user terminal 500 is configured to include a controller 50, an RFID reader-writer 54, an antenna 55, an input unit 57, and a display unit 59.

The controller 50 is configured to be communicable with the battery apparatus 100, which is an external device, via the RFID reader-writer 54 and the antenna 55. The RFID reader-writer 54 is an example of a communication device that employs wireless communication technology such as NFC-based communication technology and RFID technology. The antenna 55 transmits a carrier wave corresponding to the high frequency signal transferred from the RFID reader-writer 54. The antenna 55 receives the high frequency signal transmitted from an external device (e.g., the battery apparatus 100) by load modulation. In other words, the antenna 55 transmits and receives signals in a non-contact manner to and from an external device.

The controller 50 transmits control information pertaining to the operation specification of the battery 7 based on the user input through the input unit 57 to the battery apparatus 100 via the RFID reader-writer 54 and the antenna 55. The input unit 57 functions as a user interface (U/I) to allow the user to specify the operation specification of the battery 7.

The controller 50 acquires various types of information stored in the battery apparatus 100 (e.g., information relating to the battery 7, or information relating to a connection device connected to the battery 7) via the RFID reader-writer 54 and the antenna 55. The controller 50 causes the display unit 59 to display the information acquired from the battery apparatus 100. The display unit 59 is an output interface that is used to display information. An example of the display unit 59 may include a display device.

[1.4. Circuit Configuration of RFID Reader-Writer]

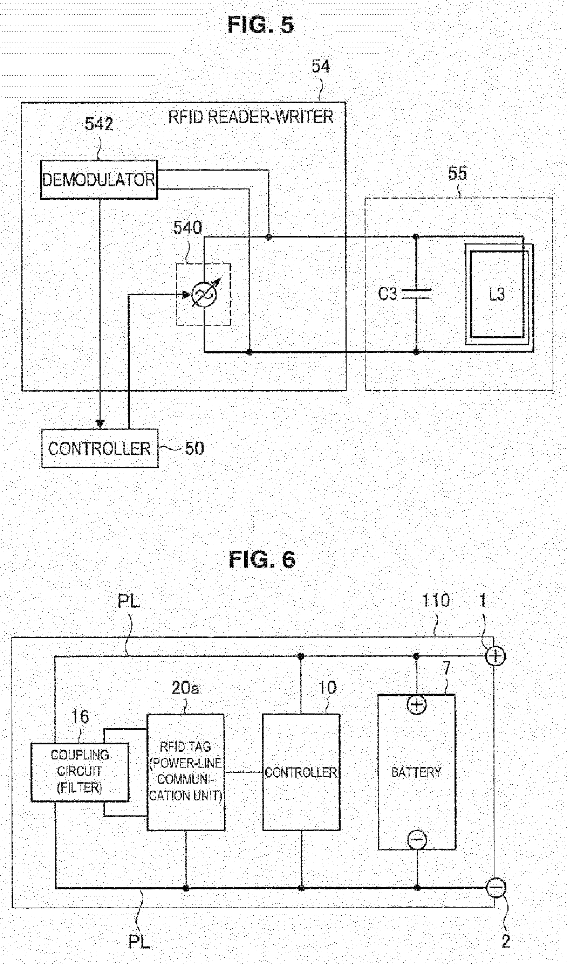

The circuit configuration of the RFID reader-writer 54 will be described with reference to FIG. 5. FIG. 5 is a circuit diagram illustrating an exemplary circuit configuration of the RFID reader-writer 54 according to the present embodiment. In the example shown in FIG. 5, the antenna 55 and the controller 50 are illustrated as well. The antenna 55 has a configuration similar to the antenna 15 described above, and thus the detailed description thereof will be omitted.

The RFID reader-writer 54 may be configured to include a high frequency signal generator 540 and a demodulator 542, and functions as a reader/writer (or interrogator) in NFC or the like. The RFID reader-writer 54 may be configured to further include an encryption circuit (not shown), a communication collision prevention (anti-collision) circuit, and so on.

The high frequency signal generator 540 may receive a high frequency signal generation instruction transferred from the controller 50 to generate a high frequency signal corresponding to the high frequency signal generation instruction. In addition, the high frequency signal generator 540 may receive a high frequency signal transmission stop instruction transferred from the controller 50 to stop generation of a high frequency signal. The high frequency signal transmission stop instruction is used to stop transmission of a high frequency signal. In FIG. 5, the alternating-current power supply is illustrated as the high frequency signal generator 540, but the high frequency signal generator 540 according to the present embodiment is not limited thereto. For example, the high frequency signal generator 132 according to the present embodiment may be configured to include a modulation circuit (not shown) that performs amplitude-shift keying (ASK) and an amplifier circuit (not shown) that amplifies the output of the modulation circuit.

The high frequency signal generated by the high frequency signal generator 540 may be a high frequency signal that includes a processing execution instruction or data to be processed. The processing execution instruction is used to cause an external device that is a communication target for wireless communication according to the present embodiment (i.e. external device such as the battery apparatus 100 for performing wireless communication via the antenna 55) to perform a predetermined process. The control information pertaining to the operation specification of the battery 7 may be included in the high frequency signal and then transmitted to the battery apparatus 100.

The identification information according to the present embodiment is information (data) that can be used to identify an external device (e.g., the battery apparatus 100) to be a communication target for wireless communication according to the present embodiment. An example of the identification information includes data that indicates a device-specific identification number or data that indicates the type of device (e.g., data indicating a manufacturer or model number). The identification information according to the present embodiment is not limited thereto, as long as it is information capable of being used to identify an external device to be a communication target for wireless communication according to the present embodiment.

The high frequency signal according to the present embodiment is not limited to the above example. For example, the high frequency signal according to the present embodiment may be a signal (e.g., non-modulated signal) that serves to supply power to an external device (more specifically, for example, a device included in the external device is provided to perform wireless communication according to the present embodiment, such as the RFID tag 20 included in the battery apparatus 100 described above).

The demodulator 542 detects the envelope of variation in amplitude of the voltage between the high frequency signal generator 540 and the antenna 55, and binarizes a detected signal, and thus the demodulator 542 demodulates a response signal transmitted from an external device such as the battery apparatus 100 (specifically, for example, a response signal transmitted by load modulation). The demodulator 542 transfers the demodulated response signal (for example, a response signal indicating a response based on the process corresponding to the high frequency signal) to the controller 50. A means for demodulating the response signal in the demodulator 542 is not limited thereto, and the response signal may be demodulated using the variation in the phase of voltages between the high frequency signal generator 540 and the antenna 55.

In this way, the controller 50 can transmit and receive information to and from the RFID reader-writer 54 and the antenna 55.

[1.5. Conclusion]

As described above, the battery apparatus 100 according to the present embodiment has the configuration capable of communicating with an external device, such as the user terminal 500, via the RFID tag 20 and the antenna 15. This configuration makes it possible for the battery apparatus 100 to acquire control information pertaining to the operation specification of the battery 7 from the user terminal 500, such as a smartphone, and to update the control data used to control the operation of each component in the battery apparatus 100 based on the acquired information. In addition, the battery apparatus 100 can output the information stored in the battery apparatus 100 (e.g., information relating to the battery 7 or information relating to a connection device connected to the battery 7) to the user terminal 500. Thus, it is possible for the user to easily update the data for control of the battery apparatus 100 and to read various types of information stored in the battery apparatus 100, without use of a dedicated device.

The battery apparatus 100 according to the present embodiment can control start and stop operations for discharging from the battery 7 or start and stop operations for charging to the battery 7, by allowing the switch circuit 4 for the protection circuit, which has been typically provided in the art, to be used in the existing battery apparatus. In addition, the battery apparatus 100 can acquire information relating to the battery 7 by allowing various types of sensors (e.g., the measuring circuit 11) for monitoring the state of the battery 7, which has been typically provided in the art, to be used for other purposes in the existing battery apparatus. In this way, in implementing the battery apparatus 100 according to the present embodiment, it is possible to use a circuit or a sensor, which has been typically provided in the existing battery apparatus, for other purposes. Thus, it is possible to add the configuration (i.e. the RFID tag 20 and antenna 15) for communicating between the existing battery apparatus and an external device to the existing battery apparatus and to rewrite the program used to operate the controller 10, thereby implementing the battery apparatus 100 according to the present embodiment at low cost.

The data processor 230 of the RFID tag 20 is driven by the driving power outputted from the regulator 226 as a power supply. Thus, the battery apparatus 100 can communicate with the user terminal 500 without providing an additional power supply to drive the RFID tag 20.

The battery apparatus 100 according to the present embodiment may employ the RFID reader-writer 54 instead of the RFID tag 20. In this case, it is necessary to provide a power supply source to supply power to the RFID reader-writer 54. The battery 7 may be used as a power supply source of the RFID reader-writer 54.

<2. Second Embodiment>

[2.1. Schematic Configuration of Battery Apparatus]

A battery apparatus 110 according to a second embodiment of the present disclosure will be described. The schematic configuration of the battery apparatus 110 according to the second embodiment will be described with reference to FIG. 6. FIG. 6 is a schematic diagram illustrating the configuration of the battery apparatus 110 according to the second embodiment.

As shown in FIG. 6, the battery apparatus 110 according to the present embodiment is configured to include a positive terminal 1, a negative terminal 2, a battery 7, a controller 10, an RFID tag (power-line communication unit) 20a, and a coupling circuit (filter) 16. The battery apparatus 110 shown in FIG. 6 includes a switch circuit 4 and a measuring circuit 11, which is similar to the battery apparatus 100 (refer to FIG. 1) according to the first embodiment, but these are not illustrated in FIG. 6.

In the battery apparatus 110 according to the first embodiment, the RFID tag 20 communicates with an external device such as the user terminal 500 via the antenna 15 provided in the battery apparatus 100. On the other hand, in the battery apparatus 110 according to the second embodiment, the RFID tag (power-line communication unit) 20a communicates with a connection device 410, which is connected to the battery 7, via a power line PL. This communication (power-line communication) is performed over the power line PL. In the following, the description will be given by paying attention to configurations different from the battery apparatus 110 according to the first embodiment, and the detailed description of the configuration similar to the battery apparatus 110 will be omitted.

The battery apparatus 110 according to the present embodiment is attached to a charger at charging. In this case, the positive terminal 1 and the negative terminal 2 provided at both end of the power line PL are connected to a positive terminal and a negative terminal of the charger, respectively, and the charging operation is performed via the power line PL. When electrical equipment is used, the positive terminal 1 and the negative terminal 2 are respectively connected to a positive terminal and a negative terminal of the electrical equipment, which is similar to the case in which a charging operation is performed, and a discharging operation is performed via the power line PL. In the following description, a charger or electrical equipment to be connected to the positive terminal 1 and the negative terminal 2 may be sometimes collectively referred to as "connection device (410)".

When the connection device 410 is connected to the positive terminal 1 and the negative terminal 2, the controller 10 is configured to communicate (power-line communication) with the connection device 419 via the RFID tag 20a, the coupling circuit 16, and the power line PL. In this case, the coupling circuit 16 is interposed between the RFID tag 20a and the power line PL, and serves to filter the signal transferred via the power line PL. The detailed description of the RFID tag 20a and the coupling circuit 16 will be described later. The configuration described above makes it possible for the controller 10 to communicate with an external device such as the user terminal 500, for example, via an antenna provided in the connection device 410.

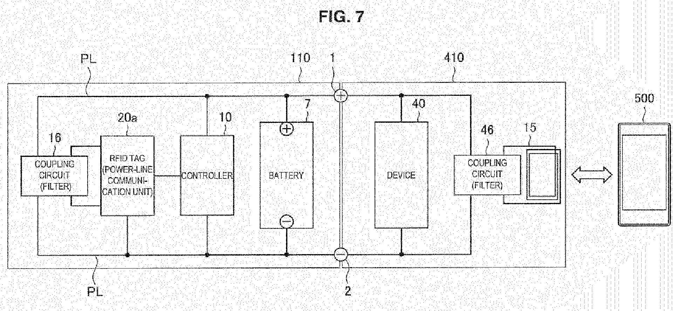

For example, FIG. 7 is a diagram illustrating an exemplary configuration in which the battery apparatus 110 according to the present embodiment communicates with the user terminal 500. In the example shown in FIG. 7, the connection device 410 is configured to include a device 40, an antenna 15, and a coupling circuit (filter) 46.

The device 40 is driven by the power supplied from the battery 7 via the power line PL. The antenna 15 is connected to a power line in the connection device 410 via the coupling circuit 46. The power line in the connection device 410 is used to supply power from the battery 7 to the device 40. The coupling circuit 46 is similar to the coupling circuit 16 of the battery apparatus 110. The antenna 15 according to the present embodiment may have a configuration similar to the antenna 15 of the battery apparatus 100 according to the above-described first embodiment.

The carrier wave transmitted from the RFID tag 20a is superimposed on the power transmitted over the power line PL via the coupling circuit 16, and is transmitted to the connection device 410 over the power line PL. In the carrier wave transmitted to the power line in the connection device 410, the coupling circuit 46 filters out a power component and then only carrier wave component is transmitted to the user terminal 500 that is an external device via the antenna 15. This configuration makes it possible to transmit the information stored in the battery apparatus 110 to the user terminal 500 via the antenna 15 provided in the connection device 410.

The carrier wave transmitted from the user terminal 500 is received by the antenna 15, and is superimposed on the power transferred over the power line in the connection device 410 via the coupling circuit 46, and then is transmitted to the battery apparatus 110 over the power line in the connection device 410. In the carrier wave transferred to the power line PL in the battery apparatus 110, a power component is filtered out by the coupling circuit 16, and only a carrier wave component is received by the RFID tag 20a. The RFID tag 20a decodes the information transmitted from the user terminal 500 based on the received carrier wave, and the RFID tag 20a notifies the controller 10 of the decoded information. This configuration makes it possible to transmit the control information pertaining to the operation specification of the battery 7 from the user terminal 500 to the controller 10 in the battery apparatus 110 via the antenna 15 provided in the connection device 410.

The information relating to the device 40 may be transmitted to the controller 10 via the power line in the connection device 410 and the power line PL in the battery apparatus 110. This configuration makes it possible to transmit the information relating to the device 40 to the controller 10 without a connection between the device 40 and the controller 10 through a leased line (e.g., a serial cable).

[2.2. Circuit Configuration of RFID Tag and Coupling Circuit]

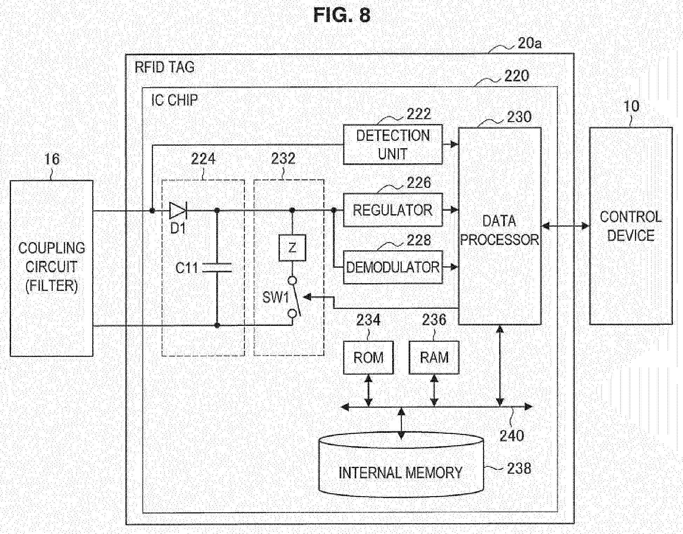

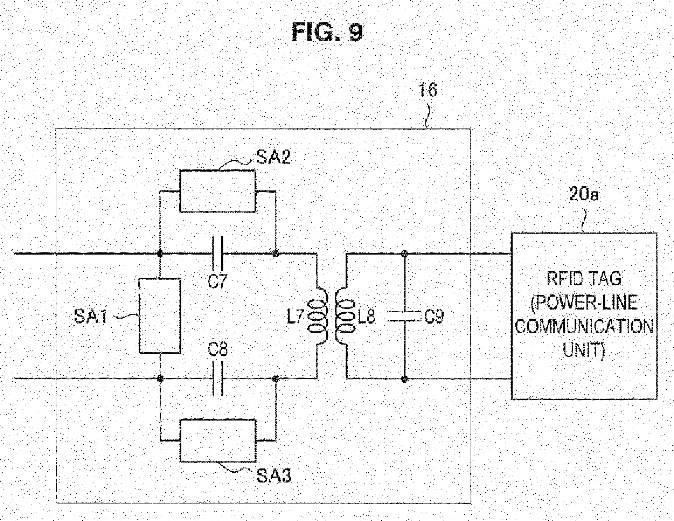

The circuit configuration of the RFID tag 20a and the coupling circuit 16 will be described with reference to FIGS. 8 and 9. Referring first to FIG. 8, FIG. 8 is a circuit diagram illustrating an exemplary circuit configuration of the RFID tag 20a according to the present embodiment. FIG. 8 also illustrates the coupling circuit 16. As shown in FIG. 8, the RFID tag 20a according to the present embodiment has a configuration similar to the RFID tag 20 according to the first embodiment (refer to FIG. 3), except that the RFID tag 20a is connected to the power line PL via the coupling circuit (filter) 16. Thus, in the following, the description will be given by paying attention to the circuit configuration of the coupling circuit (filter) 16 with reference to FIG. 9, and the detailed description of a configuration similar to the RFID tag 20 will be omitted. FIG. 9 is a circuit diagram illustrating an exemplary circuit configuration of the coupling circuit (filter) 16.

The coupling circuit 16 is connected between the RFID tag (power-line communication unit) 20a according to the present embodiment and the power line PL, and serves to filter the signal transmitted through the power line PL. More specifically, the coupling circuit 16 functions to cut off at least the power transmitted through the power line PL and not to cut off the high frequency signal from among the signals transferred through the power line PL. The battery apparatus 110 provided with the coupling circuit 16 allows the power that can be a noise to be prevented from being transferred to the RFID tag 20a. Thus, the RFID tag 20a can communicate with an external device (e.g., the connection device 410), which is a communication target for wired and wireless communications according to the present embodiment, with higher accuracy.

As shown in FIG. 9, the coupling circuit 16 is configured, for example, to include inductors L7 and L8, capacitors C7 to C9, and surge absorbers SA1 to SA3. The configuration of the coupling circuit 16 according to the present embodiment is not limited to that shown in FIG. 9.

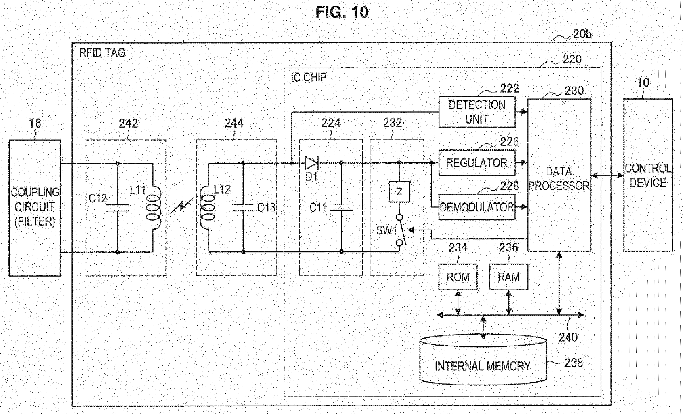

The configuration of the RFID tag 20a according to the present embodiment is not limited to that shown in FIG. 8. FIG. 10 is a diagram illustrated to describe another example of the RFID tag 20a (hereinafter referred to as "RFID tag 20b") included in the battery apparatus 110 according to the present embodiment. FIG. 10 also illustrates the coupling circuit 16, as is the case with FIG. 8. The RFID tag 20b according to the present embodiment may not be provided with each component that constitutes the IC chip 220 shown in FIG. 10 in the form of IC chip.

The RFID tag 20b shown in FIG. 10 is configured to include a first high frequency transmitter-receiver 242, a second high frequency transmitter-receiver 244, and the IC chip 220.

The first high frequency transmitter-receiver 242 is configured, for example, to include an inductor L11 having predetermined inductance and a capacitor C12 having predetermined capacitance to form a resonant circuit. An example of the resonance frequency of the first high frequency transmitter-receiver 242 includes the frequency of a high frequency signal, such as 13.56 [MHz]. The first high frequency transmitter-receiver 242 having the above-described configuration transmits a high frequency signal transferred from the coupling circuit 16 and receives a response signal transmitted from the second high frequency transmitter-receiver 244. In other words, the first high frequency transmitter-receiver 242 functions as a first communication antenna in the RFID tag 20b.

The second high frequency transmitter-receiver 244 includes, for example, an inductor L12 having predetermined inductance and a capacitor C13 having predetermined capacitance to form a resonant circuit. An example of the resonance frequency of the second high frequency transmitter-receiver 244 includes the frequency of a high frequency signal, such as 13.56 [MHz]. The second high frequency transmitter-receiver 244 having the above-described configuration receives a high frequency signal transmitted from the first high frequency transmitter-receiver 242 and transmits a response signal. More specifically, the second high frequency transmitter-receiver 244 causes an induced voltage to be generated by electromagnetic induction depending on reception of the high frequency signal and outputs the reception voltage obtained by resonating the induced voltage at a predetermined resonance frequency to the IC chip 220. The second high frequency transmitter-receiver 244 transmits the response signal by load modulation performed in the load modulator 232 included in the IC chip 220. In other words, the second high frequency transmitter-receiver 244 functions as a second communication antenna in the RFID tag 20b.

The IC chip 220 has a configuration similar to the IC chip 220 shown in FIG. 8, and thus performs a process similar to the IC chip 220 shown in FIG. 8 based on the reception voltage transferred from the second high frequency transmitter-receiver 244.

The RFID tag 20b having the configuration shown in FIG. 10 is driven by acquiring a voltage from the received high frequency signal and performs a process indicated by the received high frequency signal, as is the case with the RFID tag 20a shown in FIG. 8. Thus, the RFID tag 20b can transmit the response signal corresponding to the process by load modulation. The RFID tag 20b having the configuration shown in FIG. 10 can use the IC chip based on NFC or RFID for other purposes, and thus the advantage of easier installation is achieved.

[2.3. Modification]

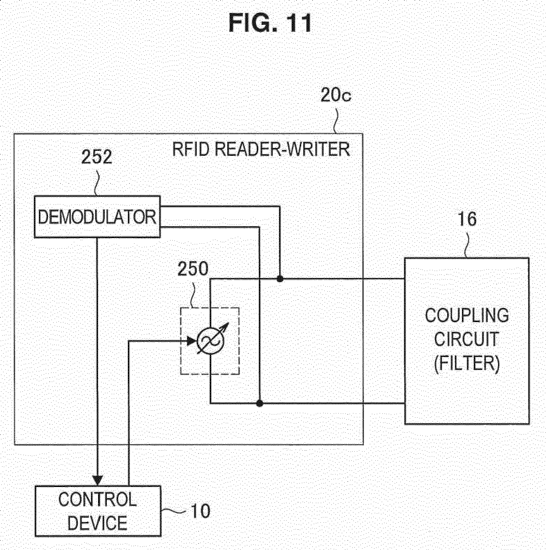

A battery apparatus 110 according to a modification of the second embodiment will be described. In the present embodiment described above, the description has been made of the case where the controller 10 communicates with the connection device 410, which is electrically connected to the power line PL, via the coupling circuit 16 and the power line PL through the RFID tag 20a. On the other hand, an RFID reader-writer 20c may be used instead of the RFID tag 20a. In the following, the description will be given of a case where the RFID reader-writer 20c is used instead of the RFID tag 20a with reference to FIG. 11 as a modification of the second embodiment. FIG. 11 is a circuit diagram illustrating an exemplary circuit configuration of the RFID reader-writer 20c according to the modification of the present embodiment. FIG. 11 also illustrates the controller 10 and the coupling circuit 16.

As shown in FIG. 11, the RFID reader-writer 20c according to the present modification is different from the RFID reader-writer 54 according to the first embodiment (refer to FIG. 5) in that the RFID reader-writer 20c is connected to the power line PL via the coupling circuit (filter) 16, but the RFID reader-writer 54 may be applicable. Thus, in the following, the description will be given of the circuit configuration of the RFID reader-writer 20c, especially, by paying attention to the portion of the RFID reader-writer 20c connected to the coupling circuit 16, which is different from the RFID reader-writer 54 according to the first embodiment shown in FIG. 5. The detailed description of the configuration similar to the RFID reader-writer 54 will be omitted.

A high frequency signal generator 250 of a high frequency signal generator 150 is configured, for example, to receive a high frequency signal generation instruction transferred from the controller 10 and to generate a high frequency signal corresponding to the high frequency signal generation instruction. The high frequency signal generator 250 is configured, for example, to receive a high frequency signal transmission stop instruction that indicates a transmission stop of the high frequency signal and is transferred from the controller 10, and to stop generation of the high frequency signal.

The high frequency signal generated by the high frequency signal generator 250 is similar to that of the RFID reader-writer 54 according to the first embodiment except for the difference that an external device is the connection device 410 (e.g., data to be transmitted).

The demodulator 252 detects the envelope of variation in amplitude of the voltage between the high frequency signal generator 250 and the coupling circuit 16, and binarizes a detected signal, and thus the demodulator 542 demodulates a response signal transmitted from an external device such as the connection device 410 (specifically, for example, a response signal transmitted by load modulation). The demodulator 252 transfers the demodulated response signal (for example, a response signal indicating a response based on the process corresponding to the high frequency signal) to the controller 10. A means for demodulating the response signal in the demodulator 252 is not limited thereto, and the response signal may be demodulated using the variation in the phase of voltages between the high frequency signal generator 250 and the coupling circuit 16.

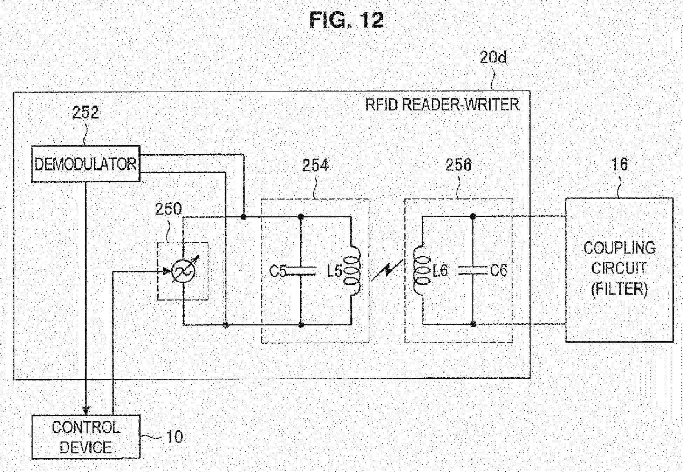

The configuration of the RFID reader-writer 20c according to the modification of the second embodiment is not limited to the configuration shown in FIG. 11. FIG. 12 is a circuit diagram illustrating an exemplary circuit configuration of an RFID reader-writer 20d according to the modification of the present embodiment. FIG. 12 also illustrates the controller 10 and the coupling circuit 16, as is the case with FIG. 11.

The RFID reader-writer 20d shown in FIG. 12 is configured to include the high frequency signal generator 250, the demodulator 252, a first high frequency transmitter-receiver 254, and a second high frequency transmitter-receiver 256. The RFID reader-writer 20d may be configured to further include an encryption circuit (not shown), communication collision prevention (anti-collision) circuit, and so on.

The high frequency signal generator 250 generates a high frequency signal corresponding to the high frequency signal generation instruction and stops the generation of the high frequency signal depending on a high frequency signal transmission stop instruction, as is the case with the high frequency signal generator 540 shown in FIG. 11.

The demodulator 252 detects the envelope of variation in amplitude of the voltage at the antenna terminal of the high frequency signal generator 250, and binarizes the detected signal, and thus the demodulator 252 demodulates a response signal transmitted from the connection device 410. A means for demodulating the response signal in the demodulator 252 is not limited thereto, for example, the demodulator 252 may demodulate the response signal using the variation in phase of a voltage at the antenna terminal of the high frequency signal generator 250.

The first high frequency transmitter-receiver 254 includes, for example, an inductor L5 having predetermined inductance and a capacitor C5 having predetermined capacitance to form a resonant circuit. An example of the resonance frequency of the first high frequency transmitter-receiver 254 includes the frequency of a high frequency signal, such as 13.56 [MHz]. The first high frequency transmitter-receiver 254 having the above-described configuration transmits a high frequency signal generated by the high frequency signal generator 250 and receives a response signal transmitted through the second high frequency transmitter-receiver 256 from an external device such as the connection device 410. In other words, the first high frequency transmitter-receiver 254 functions as a first communication antenna in the RFID tag 20c.

The second high frequency transmitter-receiver 256 is configured to include, for example, an inductor L6 having predetermined inductance and a capacitor C6 having predetermined capacitance to form a resonant circuit. An example of the resonance frequency of the second high frequency transmitter-receiver 256 includes the frequency of a high frequency signal, such as 13.56 [MHz]. The second high frequency transmitter-receiver 256 having the above-described configuration receives a high frequency signal transmitted from the first high frequency transmitter-receiver 254 and transmits a response signal transmitted from an external device such as the connection device 410. In other words, the second high frequency transmitter-receiver 256 functions as a second communication antenna in the RFID tag 20c.

As described above, the RFID reader-writer 20d according to the first embodiment functions as a reader/writer in NFC or the like, as is the case with the RFID reader-writer 20c shown in FIG. 11. In other words, the RFID reader-writer 20d may function to communicate with an external device such as the connection device 410 via the power line PL.

When the RFID reader-writer 20c (or 20d) is used instead of the RFID reader-writer 20a, it is necessary to supply power to the RFID reader-writer 20c (or 20d) to be driven. In this case, as a means for supplying power to the RFID reader-writer 20c (or 20d), the battery 7 may be used to supply power, or a separate power supply may be provided.

[2.4. Conclusion]

As described above, the battery apparatus 110 according to the present embodiment is configured to communicate with the connection device 410, which is electrically connected to the power line PL, via the RFID tag 20a and the coupling circuit 16. In other words, the battery apparatus 110 according to the present embodiment allows the power line PL and a power line in the connection device 410 to be used as a repeater, thereby communicating with an external device (e.g., the user terminal 500) via the antenna 15 provided in the connection device 410. Thus, in the battery apparatus 110 according to the present embodiment, the position at which the antenna 15 is provided is not limited to the location in the battery apparatus 110. The battery apparatus 110 according to the present embodiment has an advantage over the battery apparatus 100 according to the first embodiment in terms of a higher degree of freedom concerning the location of the antenna 15.

<3. Third Embodiment>

[3.1. Configuration of Battery Apparatus]

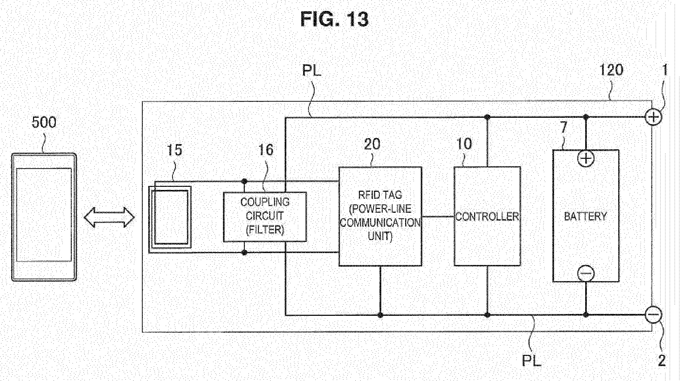

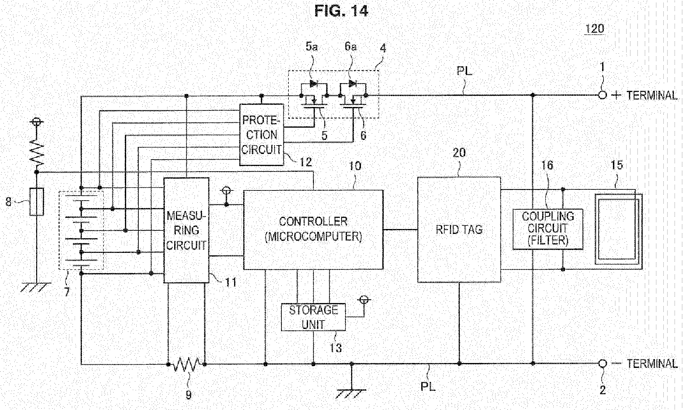

A battery apparatus 120 according to a third embodiment of the present disclosure will be described. The battery apparatus 100 according to the first embodiment communicates with the user terminal 500 that is an external device via the antenna 15 provided in the battery apparatus 100. In other words, the battery apparatus 100 according to the first embodiment acts as a single unit to communicate with the user terminal 500. On the other hand, the battery apparatus 110 according to the second embodiment uses power-line communication to communicate with the user terminal 500 via the antenna 15 provided in the connection device 410 that is electrically connected to the power line PL. In other words, the battery apparatus 110 according to the second embodiment allows the power line PL and a power line in the connection device 410 to be used as a repeater, thus it has an advantage in terms of a higher degree of freedom concerning the location of the antenna 15. On the other hand, the battery apparatus 120 according to the third embodiment has advantages of both of the battery apparatus 100 according to the first embodiment and the battery apparatus 110 according to the second embodiment. The battery apparatus 120 according to the third embodiment will be described with reference to FIGS. 13 and 14. The user terminal 500 may be configured to communicate via an external service and network such as a cloud server or center (e.g., data center). This is similarly applicable to the first and second embodiments described above.

Now refer to FIG. 13. FIG. 13 is a schematic diagram illustrating the configuration of the battery apparatus 120 according to the third embodiment.

As shown in FIG. 13, the battery apparatus 120 according to the present embodiment is configured to include a positive terminal 1, a negative terminal 2, a battery 7, a controller 10, an RFID tag (power-line communication unit) 20 and the antenna 15, and a coupling circuit (filter) 16. The battery apparatus 120 shown in FIG. 13 includes a switch circuit 4 and a measuring circuit 11, which is similar to the battery apparatus 100 (refer to FIG. 1) according to the first embodiment, but these are not illustrated in FIG. 13.

The configuration of the controller 10 and the battery 7 and their relationship with the connection device 140 via the positive terminal 1 and the negative terminal 2 are similar to those of the battery apparatus 100 according to the first embodiment and the battery apparatus 110 according to the second embodiment described above. Thus, in the following, a description will be given by paying attention to the portion of the battery apparatus 120 according to the present embodiment, which is different from the battery apparatus 100 and 120. The detailed description of a configuration similar to the battery apparatus 100 and 120 will be omitted.

The RFID tag 20 according to the present embodiment is electrically connected to the antenna 15. In other words, the controller 10 according to the present embodiment is able to communicate with the user terminal 500 via the RFID ta 20 and the antenna 15, as is the case with the controller 10 according to the first embodiment.

The coupling circuit 16 is connected to the RFID tag 20 and the power line PL, and functions to filter out the signal transferred from the power line PL. In other words, the controller 10 according to the present embodiment is able to perform communication (power-line communication) with the connection device 410 via the RFID tag 20, the coupling circuit 16, and the power line PL, as is the case with the controller 10 according to the second embodiment.

The flow of signals in the case where the battery apparatus 120 communicates with the user terminal 500 will be described with reference to FIG. 14. FIG. 14 is a circuit diagram illustrating an exemplary circuit configuration of the battery apparatus 120 according to the present embodiment.

For example, when the user terminal 500 that is an external device is within a communication coverage range with the antenna 15 as is the case with the battery apparatus 100 according to the first embodiment, the antenna 15 is coupled to an antenna circuit included in an external device (e.g., the user terminal 500), thereby applying a load. This allows a high frequency signal from the RFID tag 20 to be transferred to the antenna 15, and thus the antenna 15 transmits a carrier wave corresponding to the high frequency signal. In other words, when the user terminal 500 and the antenna 15 are within a communication coverage range, the communication between the controller 10 and the user terminal 500 is established via the RFID tag 20 and the antenna 15.

When the connection device 410 is connected to the positive terminal 1 and the negative terminal 2, the controller 10 is connected to the connection device 410 via the RFID tag 20, the coupling circuit 16, and the power line PL, as is the case with the battery apparatus 110 according to the second embodiment. Thus, the transmission and reception of a carrier wave (i.e. power-line communication) between the RFID tag 20 and the connection device 410 are possible by superimposing the carrier wave on the power transmitted through the power line PL and a power line in the connection device 410. The antenna 15 may be connected to the power line in the connection device 410 via the coupling circuit (filter) 46, as is the case with the connection device 410 (refer to FIG. 7) according to the second embodiment. This configuration allows the battery apparatus 120 according to the present embodiment to use the power line PL and a power line in the connection device 410 as a repeater, thereby communicating with the user terminal 500 via the antenna 15 provided in the connection device 410, as is the case with the battery apparatus 110 according to the second embodiment.

[3.2. Conclusion]

As described above, the battery apparatus 120 according to the third embodiment is able to selectively perform a communication through the antenna 15 provided in the battery apparatus 120 or a communication through the power line PL. This configuration allows the battery apparatus 120 according to the present embodiment to have advantages of both of the battery apparatus 100 according to the first embodiment and the battery apparatus 110 according to the second embodiment.

The battery apparatus 120 may be provided with a connector for supplying the power to be charged to the battery 7 or an antenna for contactless power supply, and thus the battery apparatus 120 may be used as a charger. In this case, the antenna 15 provided in the battery apparatus 120 may be used as the antenna for contactless power supply. In such a case, the controller 10 updates the control data, which allows the battery apparatus 120 to be operated as a charger, based on the control information obtained from the user terminal 500, thereby changing the operation specification of the battery apparatus 120 used as a charger. Similarly, the battery apparatus 100 according to the first embodiment and the battery apparatus 110 according to the second embodiment may be operated as a charger by being provided with a connector for power supply or an antenna for contactless power supply.

<4. Example 1 (example of application to battery for motor-assisted bicycle)>

An application example of the battery apparatus 100, 110, and 120 according to the first to third embodiments described above will be described as an example. In the following, a description will be given of an example of application to the battery apparatus 120, but this may be applicable to the battery apparatus 100 and 120 as appropriate.

A description will be given by taking as Example 1 the case where a user who uses the battery apparatus 120 is discriminated depending on the result obtained by authenticating the user, the operation specification of the battery 7 is defined depending on the discrimination result, and the operation of the battery 7 is controlled based on the defined specification.

The battery apparatus 120 according to the present embodiment makes it possible to discriminate a user depending on a result by authenticating the user who uses the battery apparatus 120 and to change an upper limit value of a current discharged from the battery 7 depending on the discrimination result. Thus, in the following, a description will be given of a case where the battery apparatus 120 is applied to the battery for a power-assisted bicycle in terms of the battery apparatus 120 according to Example 1. In the following, the term "user" is used to indicate a user using the battery apparatus 120 (i.e., the user using the connection device 140 connected to the battery apparatus 120), unless otherwise explicitly stated.

When the battery apparatus 120 is applied as the battery for a power-assisted bicycle, for example, the upper limit value of electric current to be discharged from the battery apparatus 120 may be changed depending on the age of the user using the power-assisted bicycle (i.e., the user using the battery apparatus 120). For example, the upper limit value of electric current may be set lower for a user in the younger age group, and may be set higher for a user in the older age group to assist at a higher output than the case of the user in the younger age group.

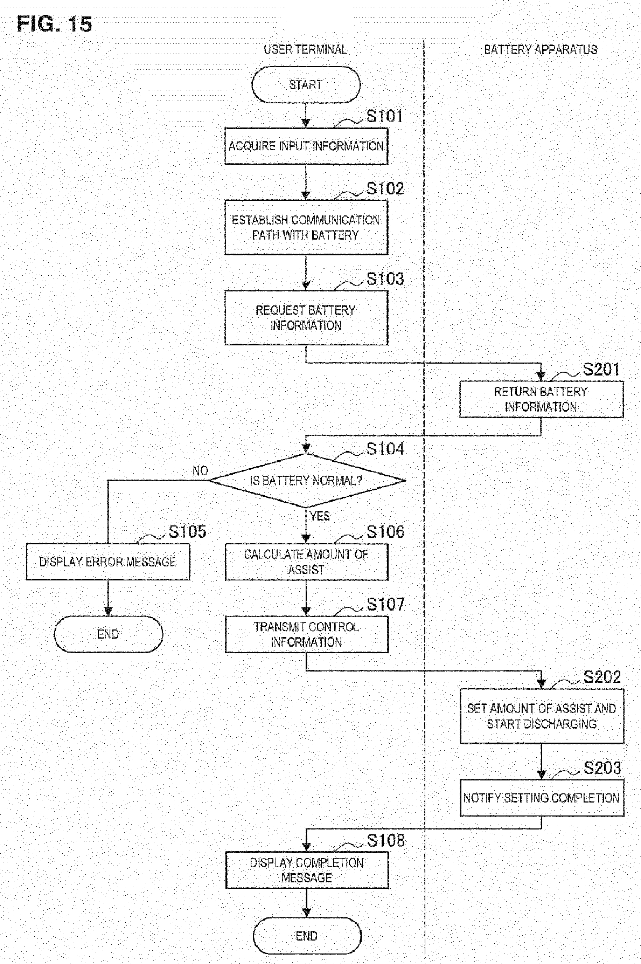

Referring to FIG. 15, a description will be given of a series of operations performed by the battery apparatus 120 according to Example 1 when the battery apparatus 120 is applied to the battery for a power-assisted bicycle. FIG. 15 is a flowchart illustrating a series of operations performed by the battery apparatus 120 according to Example 1 of the present disclosure, and FIG. 15 illustrates the case of applying the battery apparatus 120 to the battery for a power-assisted bicycle.

(Step S101)

The controller 50 of the user terminal 500 acquires authentication information that is inputted by a user via the input unit 57 to authenticate the user who uses the battery apparatus 120. The controller 50 authenticates the user based on the acquired authentication information and discriminates the user depending on the authentication result. This makes it possible for the controller 50 to specify information relating to the user, such as age or sex of the authenticated user.

(Step S102)

The controller 50 then establishes a communication path with the battery apparatus 120. More specifically, when the user moves the user terminal 500 close to the battery apparatus 120, the antenna 55 of the user terminal 500 is coupled with the antenna 15 of the battery apparatus 120 to apply a load, and thus a communication path is established between the antenna 55 and the antenna 15. This makes it possible for the controller 50 of the user terminal 500 to transmit and receive information to and from the controller 10 of the battery apparatus 120 via the RFID reader-writer 54, the antenna 55, the antenna 15, and the RFID tag 20. In this case, the RFID tag 20 is driven by the reception voltage depending on the high frequency signal received via the antenna 15, and thus it is not necessary to provide a power supply as a separate component to drive the RFID tag 20.

The antenna 15 is connected to a power line in the connection device 410 (in this case, a power-assisted bicycle) connected to the battery apparatus 120 as is the case with the battery apparatus 110 according to the second embodiment. Thus, the power line PL and the power line in the connection device 410 may be used as a communication path. In this case, the power line PL and the power line in the connection device 410 function as a repeater to relay between the RFID tag 20 and the antenna 15.

(Step S103)

When the communication path is established between the controller 50 of the user terminal 500 and the controller 10 of the battery apparatus 120, the controller 50 transmits control information, which is used to instruct to transmit information relating to the battery 7, to the controller 10 via the established communication path.

(Step S201)

The controller 10 of the battery apparatus 120 acquires the control information transmitted from the user terminal 50 via the established communication path. The controller 10 recognizes the instruction on the transmission of information relating to the battery 7 from the controller 50 based on the acquired control information.

The controller 10 reads out information relating to the battery 7 stored in the storage unit 13 and transmits the read out information to the user terminal 500 via the established communication path, based on the instruction from the controller 50. An example of the information relating to the battery 7 may include information used to determine whether the battery 7 performs normal operations, such as an amount of power charged in the battery 7 and a current value of electric current outputted from the battery 7.

(Step S104)

The controller 50 of the user terminal 500 acquires the information relating to the battery 7 that is transmitted from the battery apparatus 120 via the established communication path. The controller 50 analyzes the acquired information relating to the battery 7 and determines whether the battery apparatus 120 performs a normal operation (for example, whether it is possible to operate as the battery of a power-assisted bicycle). As a specific example, when the information relating to the battery 7 contains information indicative of the amount of power to be charged to the battery 7, the controller 50 may determine whether the battery apparatus 120 performs a normal operation depending on whether the amount of power is reduced (less than or equal to a threshold). As another example, when the information relating to the battery 7 contains information indicative of the current value of electric current outputted from the battery 7, the controller 50 may determine whether the battery apparatus 120 performs a normal operation depending on whether the current value is less than or equal to a threshold.

The above examples are merely illustrations, and methods of determining contents of information relating to the battery 7 or determining whether the battery apparatus 120 performs a normal operation based on information relating to the battery 7 are not limited as long as it is possible to determine whether the battery apparatus 120 performs a normal operation.

(Step S105)

If it is determined that the battery apparatus 120 is difficult to perform a normal operation based on the acquired information relating to the battery 7 (NO in step S104), the controller 50 causes the display unit 59 to display an error message and terminates the series of processes.

(Step S106)

If it is determined that the battery apparatus 120 can perform a normal operation based on the acquired information relating to the battery 7 (YES in step S104), the controller 50 calculates an amount of assist of the power-assisted bicycle based on a result obtained by discriminating the user.

As a specific example, the controller 50 may determine whether the user is a person in the younger age group or a person in the older age group based on the age of the discriminated user. In this case, for example, if the discriminated user is a person in the younger age group, the controller 50 may calculate the amount of assist to be lower (at least to be lower than the case of the older age group). If the discriminated user is a person in the older age group, the controller 50 may calculate the amount of assist to be higher than the case of the younger age group.

As another example, the controller 50 may calculate the amount of assist depending on the sex of the discriminated user. Specifically, if the discriminated user is male, the controller 50 may calculate the amount of assist to be lower (at least to be lower than the case of female). If the discriminated user is female, the controller 50 may calculate the amount of assist to be higher than the case of male.

The type of data used for calculation or the method of calculation is not limited as long as the controller 50 can calculate the amount of assist based on the age or sex of the user. For example, the controller 50 may calculate the amount of assist by comparing the age or sex of the discriminated user with information (table) indicative of the relationship between the age or sex of the user and the amount of assist, which is created in advance. As another example, it is possible to use a program for calculating the amount of assist through an input of the age or sex of the discriminated user. The information indicative of the relationship between the age or sex of the user and the amount of assist or the program for calculating the amount of assist may be stored previously in a location accessible to be read by the controller 50.

(Step S107)

When the amount of assist is calculated, the controller 50 transmits the control information that contains the calculated amount of assist to the controller 10 via the established communication path.

(Step S202)

The controller 10 acquires the control information transmitted from the user terminal 500 via the established communication path. The controller 10 extracts information indicative of the calculated amount of assist from the acquired control information.

The controller 10 updates the control data used to control an output power from the battery 7 based on the information indicative of the amount of assist extracted from the control information. As a specific example, the controller 10 may control the amount of assist of the power-assisted bicycle by controlling the upper limit of the current value of electric current outputted from the battery 7. In this case, the controller 10 decides an upper limit of electric current value based on the extracted amount of assist and updates the control data used to control the upper limit of the electric current value based on the decided upper limit of the electric current value.

When the control data is updated based on the extracted amount of assist, the controller 10 causes the discharging from the battery 7 to the connection device 410 (in this case, power-assisted bicycle) to be started by controlling the discharging control FET 6 of the switch circuit 4.

(Step S203)

When the update of the control data and the control to start discharging from the battery 7 are completed, the controller 10 notifies the user terminal 500 that the setting is completed via the established communication path.

(Step S108)

The controller 50 of the user terminal 500 receives a notification indicating that the setting is completed from the battery apparatus 120 via the established communication path. The controller 50, when receiving the notification from the battery apparatus 120, causes the display unit 59 to display a message for notifying that the setting (i.e. setting of the amount of assist) of the battery apparatus 120 is completed, and terminates the series of processes.

In the example described above, the controller 50 of the user terminal 500 performs the discrimination of the user or calculation of the amount of assist depending on the discrimination result. However, the control device 10 and the controller 10 of the battery apparatus 120 may perform the discrimination of the user or calculation of the amount of assist depending on the discrimination result. In this case, programs and control data used to discriminate the user or to calculate the amount of assist are previously stored in the storage unit 13 of the controller 10. The controller 50 notifies the controller 10 of the information indicative of the authentication result. The controller 10 may perform the discrimination of the user or the calculation of the amount of assist based on the information indicative of the recognition result and the program and control data stored in the storage unit 13.

The controller 10 of the battery apparatus 120 may authenticate the user. In this case, the program and control data used to authenticate the user may be previously stored in the storage unit 13. The controller 50 notifies the controller 10 of the authentication information used to authenticate the user. The controller 10 may authenticate the user based on the authentication information acquired from the controller 50 and the program and control data stored in the storage unit 13.

The example of controlling the upper limit value of electric current to be discharged from the battery apparatus 120 is not limited to the example of the battery for a power-assisted bicycle described above. For example, when the user of the battery apparatus 120 is a child, the upper limit value of electric current to be discharged from the battery apparatus 120 may be set to be a lower value in consideration of safety. When the user of the battery apparatus 120 is an adult, the upper limit value of electric current to be discharged from the battery apparatus 120 may be set to be a higher value.

As described above, the battery apparatus 120 according to Example 1 of the present disclosure makes it possible to discriminate a user who uses the battery apparatus 120 depending on a result obtained by authenticating the user, and to change the upper limit value of electric current discharged from the battery 7 depending on the discrimination result.

<5. Example 2 (example of application to battery for electric motorcycle)>

A description will be given by taking as Example 2 the case where the operation specification of the battery 7 is decided depending on position information indicating the position of the battery apparatus 120 and the operation performed by the battery 7 is controlled based on the decided specification.

With the increase in the battery's capacity and power, an electric automobile or electric motorcycle that is driven by the battery is becoming widespread. On the other hand, in some cases, the speed regulation can be set to be different depending on the environment in which an automobile or motorcycle is driven, as is the case where an automobile or motorcycle is driven on a public road or in closed environment such as a racetrack. Thus, in the following, a description will be given of a case where the battery apparatus 120 is applied to the battery for an electric motorcycle in terms of the battery apparatus 120 according to Example 2.

When the battery apparatus 120 is used as the battery for an electric motorcycle, for example, the upper limit value of electric current discharged from the battery 7 may be changed depending on a position of an electric motorcycle driven by the battery apparatus 120 (i.e. a position of the battery apparatus 120). Specifically, the battery apparatus 120 may be configured in such a way that the speed of the electric motorcycle is regulated by limiting the output power of the battery 7 for a case where the position of the battery apparatus 120 indicates a public road, but the speed regulation is released for a case where the position of the battery apparatus 120 indicates a racetrack. In a place at which the speed is regulated to a value lower than the public road, such as a parking lot, the speed of the electric motorcycle may be regulated to a value lower than the public road by further limiting the output power of the battery 7.

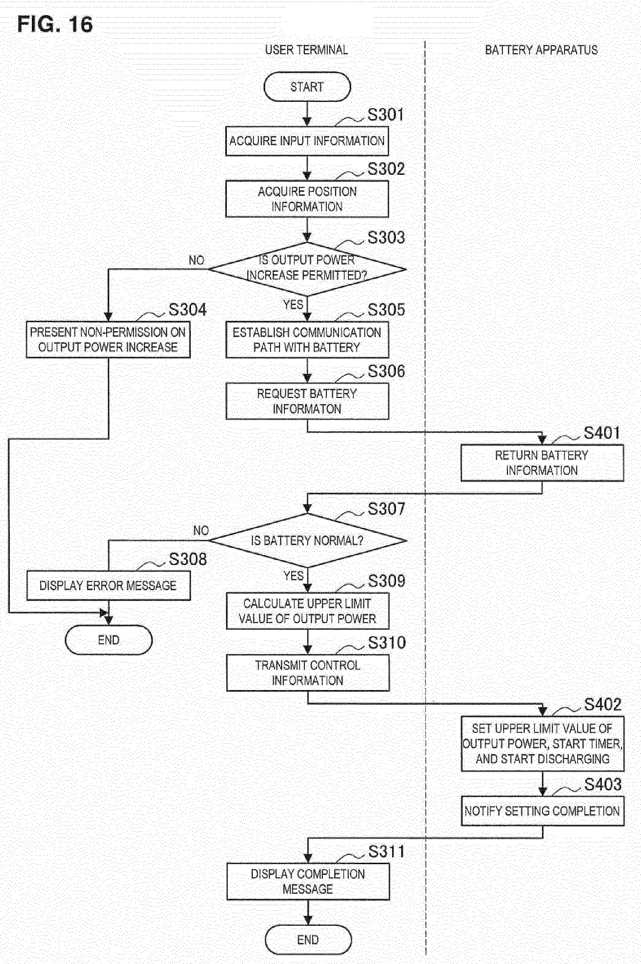

Referring to FIG. 16, a description will be given of a series of operations performed by the battery apparatus 120 according to Example 2 when the battery apparatus 120 is applied to the battery for an electric motorcycle. FIG. 16 is a flowchart illustrating a series of operations performed by the battery apparatus 120 according to Example 2 of the present disclosure, and FIG. 15 illustrates an example of the case of applying the battery apparatus 120 to the battery for an electric motorcycle.

(Step S301)

The controller 50 of the user terminal 500 acquires authentication information that is inputted by a user via the input unit 57 to authenticate the user who uses the battery apparatus 120. The controller 50 authenticates the user based on the acquired authentication information and discriminates the user depending on the authentication result. This makes it possible for the controller 50 to discriminate whether the authenticated user obtains a driving license to drive a motorcycle on a racetrack (a license to drive with no speed regulation).

(Step S302)

The controller 50 acquires position information of the battery apparatus 120. As a specific example, the user terminal 500 is provided with a global positioning system (GPS) receiver and thus the controller 50 may acquire position information indicative of the position of the user terminal 500 from the GPS receiver. In this case, the controller 50 may recognize the acquired position information of the user terminal 500 as the position information of the battery apparatus 120. This makes it possible for the controller 50 to discriminate, for example, whether the position of the battery apparatus 120 (i.e. the position of the electric motorcycle) is in the environment, such as a public road, where the speed is regulated or in the closed environment, such as a racetrack, where the speed is not regulated.

(Step S303)

The controller 50 determines whether the output power of the battery apparatus 120 is permitted to be increased (hereinafter, sometimes refer to as "output power increase"), based on the result obtained by discriminating the user and the acquired position information of the battery apparatus 120 (i.e., whether the output power limitation is released).

For example, if the discriminated user acquires the license and the position of the battery apparatus 120 is in the closed environment, such as a racetrack, where the speed is not regulated, the controller 50 may permit the output power increase of the battery apparatus 120. On the other hand, if the discriminated user does not acquire a license, the controller 50 may prevent the output power increase of the battery apparatus 120 from being permitted. If the position of the battery apparatus 120 is in the environment, such as a public road, where the speed is regulated, the controller 50 may prevent the output power increase of the battery apparatus 120 from being permitted.

(Step S304)

If the output power increase of the battery apparatus 120 is prevented from being permitted (NO in step S303), the controller 50 causes the display unit 59 to display a message to notify that the output power increase of the battery apparatus 120 is prevented from being permitted, and then terminates the series of processes.

(Step S305)

If the output power increase of the battery apparatus 120 is permitted (YES in step S303), the controller 50 establishes a communication path with the battery apparatus 120. Specifically, when the user moves the user terminal 500 close to the battery apparatus 120, the antenna 55 of the user terminal 500 is coupled with the antenna 15 of the battery apparatus 120 to apply a load, and thus a communication path is established between the antenna 55 and the antenna 15. This makes it possible for the controller 50 of the user terminal 500 to transmit and receive information to and from the controller 10 of the battery apparatus 120 via the RFID reader-writer 54, the antenna 55, the antenna 15, and the RFID tag 20.

(Step S306)

When the communication path is established between the controller 50 of the user terminal 500 and the controller 10 of the battery apparatus 120, the controller 50 transmits control information, which is used to instruct to transmit information relating to the battery 7, to the controller 10 via the established communication path.

(Step S401)

The controller 10 of the battery apparatus 120 acquires the control information transmitted from the user terminal 50 via the established communication path. The controller 10 recognizes the instruction on the transmission of information relating to the battery 7 from the controller 50 based on the acquired control information.

The controller 10 reads out information relating to the battery 7 stored in the storage unit 13 and transmits the read out information to the user terminal 500 via the established communication path, based on the instruction from the controller 50. As the information relating to the battery 7, the determination of what information is transmitted from the controller 10 to the user terminal 500 may be performed based on a similar idea to the case of Example 1 or may be changed as appropriate depending on operations.

(Step S307)

The controller 50 of the user terminal 500 acquires information relating to the battery 7, which is transmitted from the battery apparatus 120 via the established communication path. The controller 50 analyzes the acquired information relating to the battery 7 and determines whether the battery apparatus 120 performs a normal operation (for example, whether it is possible to operate as the battery of an electric motorcycle).

Methods of determining contents of information relating to the battery 7 or determining whether the battery apparatus 120 performs a normal operation based on information relating to the battery 7 are not limited as long as it is possible to determine whether the battery apparatus 120 performs a normal operation.

(Step S308)

If it is determined that the battery apparatus 120 is difficult to perform a normal operation based on the acquired information relating to the battery 7 (NO in step S307), the controller 50 causes the display unit 59 to display an error message and terminates the series of processes.

(Step S309)

If the controller 50 determines that the battery apparatus 120 can perform a normal operation based on the acquired information relating to the battery 7 (YES in step S307), the controller 50 calculates the upper limit value of the output power of the electric motorcycle (hereinafter, sometimes simply refer to as "output power upper limit value") based on the result obtained by discriminating the user or the position information of the battery apparatus 120.

As a specific example, when the battery apparatus 120 is placed in the environment, such as a public road, where the speed is regulated, the controller 50 may limit the output power upper limit value in accordance with the regulated speed. When the battery apparatus 120 is placed in the closed environment, such as a racetrack, where the speed is not regulated, the controller 50 may release the limitation on the output power upper limit value or may set the output power upper limit value to be higher than the case where the speed is regulated. When the battery apparatus 120 is placed in the environment, such as a parking lot, where the speed is regulated to be further lower than the public road, the output power upper limit value may be limited to be lower than the public road

As another example, when the maximum speed is regulated depending on the license obtained by the user, the controller 50 may limit the output power upper limit value depending on the result obtained by discriminating the user.

The controller 50 may set a time limit for increasing the output power. For example, when a contract to increase the output power of the battery apparatus 120 is made in time units for each user, the information on the user and the information indicative of the contract content may be associated with each other. In this case, the controller 50 may specify the contract content depending on the result obtained by discriminating the user and may set the time limit of the output power increase based on the specified contract content. In the following, a description will be given of a case where the controller 50 sets a time limit for the output power increase.

(Step S310)

When the calculation of an output power upper limit value and the specification of a time limit are completed, the controller 50 transmits control information, which contains the calculated output power upper limit value and the specified time limit, to the controller 10 via the established communication path.

(Step S402)

The controller 10 acquires the control information transmitted from the user terminal 500 via the established communication path. The controller 10 extracts information indicative of the calculated output power upper limit value and information indicative of the specified time limit from the acquired control information.

The controller 10 updates the control data used to control the output power from the battery 7, based on the information indicative of the output power upper limit value extracted from the control information. As a specific example, the controller 10 may control the output power upper limit value of the electric motorcycle by controlling the upper limit of electric current outputted from the battery 7. In this case, the controller 10 decides the upper limit of electric current based on the extracted output power upper limit value and updates the control data used to control the upper limit of electric current based on the decided upper limit of electric current.

When the control data is updated based on the extracted output power upper limit value, the controller 10 causes discharging from the battery 7 to the connection device 410 (in this case, power-assisted bicycle) to be started by controlling the discharging control FET 6 of the switch circuit 4. When the discharging is started, the controller 10 starts to measure the time elapsed from the start of discharging (hereinafter, sometimes refer to as "discharging time"). The controller 10 may limit or stop the output power from the battery 7 when the discharging time reaches the time limit extracted from the control information.

(Step S403)

When the update of the control data and the control to start discharging from the battery 7 are completed, the controller 10 notifies the user terminal 500 that the setting is completed via the established communication path.

(Step S311)

The controller 50 of the user terminal 500 receives a notification indicating that the setting is completed from the battery apparatus 120 via the established communication path. The controller 50, when receiving the notification from the battery apparatus 120, causes the display unit 59 to display a message for notifying that the setting (i.e. setting of the amount of assist) of the battery apparatus 120 is completed, and terminates the series of processes.

In the example described above, the user terminal 500 acquires the position information and calculates the output power upper limit value based on the acquired position information. However, the controller 10 of the battery apparatus 120 may acquire the position information and may calculate the output power upper limit value based on the acquired position information. In this case, the battery apparatus 120 may be provided with a unit used to acquire the position information (e.g., GPS receiver). Programs and control data used to acquire the position information and calculate the output power upper limit value may be previously stored in the storage unit 13 of the controller 10. The controller 10 may receive an instruction from the controller 50 to perform acquisition of the position information and calculation of the output power upper limit value based on the program and control data stored in the storage unit 13.

As described above, the battery apparatus 120 according to Example 2 of the present disclosure makes it possible to control the operation of the battery 7 such as changing the upper limit value of electric current discharged by the battery 7 depending on the position information of the battery apparatus 120. In addition, the battery apparatus 120 according to Example 2 makes it possible to set the time limit to control the operation of the battery 7. This configuration allows the output power of the battery 7 to be increased when it is within the time limit by setting the start of the discharging from the battery 7 as a starting point. In addition, this configuration allows the battery apparatus 120 to be operated so that the output power of the battery 7 is limited when it exceeds the time limit.

<6. Example 3 (example of application to electric cart)>

A description will be given by taking as Example 3 the case where the battery apparatus 120 monitors a use condition of the battery 7 based on a change in the output power from the battery 7 and controls the operation of the battery 7 depending on the use condition of the battery 7.

For example, in a situation where an electric cart is to be rented, when the user who rents an electric cart is subjected to dangerous driving, for example, sudden acceleration or a driving that exceeds the speed regulation, thus there is a demand to control the output power of the electric cart to prevent the dangerous driving. However, it is often difficult for an administrator to control the output power of the electric cart depending on the driving condition of the user while monitoring the driving condition of the user one by one. Thus, in Example 3, a description will be given of a case where the battery apparatus 120 estimates the operation of the electric cart by monitoring a change in the output power from the battery 7, and then, if it is determined that the user is subjected to dangerous driving based on the estimation result, the output power from the battery 7 is limited.

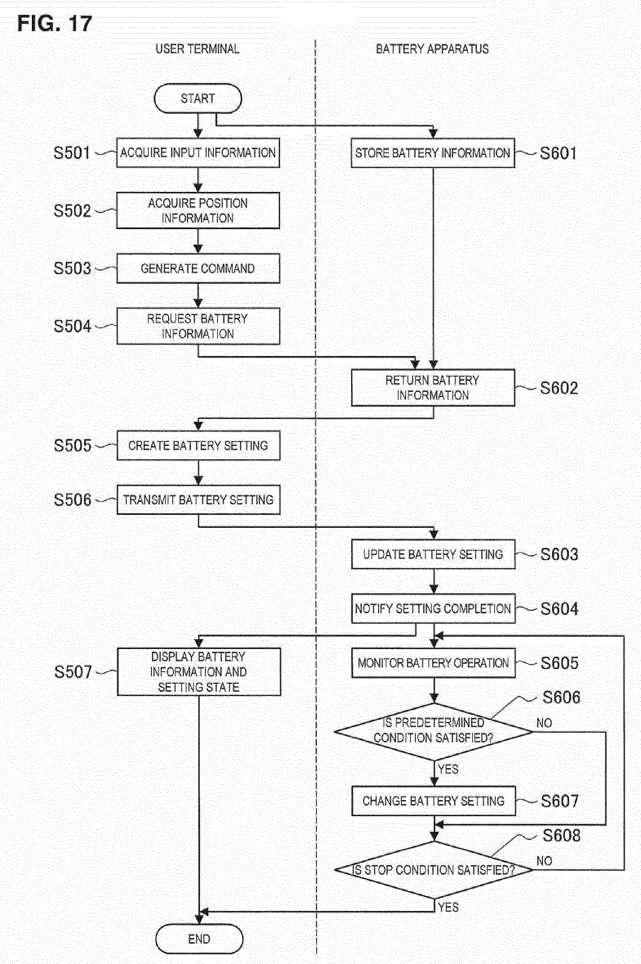

Referring to FIG. 17, a description will be given of a series of operations performed by the battery apparatus 120 according to Example 3 when the battery apparatus 120 is applied to the battery for an electric cart. FIG. 17 is a flowchart illustrating a series of operations performed by the battery apparatus 120 according to Example 3 of the present disclosure, and FIG. 15 illustrates an example of the case of applying the battery apparatus 120 to the battery for an electric cart.

(Step S501)

The controller 50 of the user terminal 500 acquires authentication information that is inputted by a user through the input unit 57 and is used to authenticate the user using the battery apparatus 120. The controller 50 performs authentication based on the acquired authentication information and discriminates the user depending on the authentication result. The controller 50 allows information relating to the user, such as the type of the user, the billing condition of the discriminated user, and the age or sex of the user, to be specified, based on the result obtained by discriminating the user. The type of the user indicates whether the user is a general user or a special user including a service man or administrator.

(Step S502)

The controller 50 acquires position information of the battery apparatus 120. A method of acquiring the position information is similar to Example 2 described above. Thus, the controller 50 can discriminate, for example, whether the position of the battery apparatus 120 (i.e. the position of electric motorcycle) is in the environment, such as a public road, where the speed is regulated or in the closed environment, such as a racetrack, where the speed is not regulated.

(Step S503)

The controller 50 generates a command used to acquire information (i.e., control information) relating to the battery 7 from the battery apparatus 120 based on the result obtained by discriminating the user. The generated command may indicate what information is transmitted as the information relating to the battery 7.

(Step S504)

If a command is generated, the controller 50 establishes a communication path with the battery apparatus 120. Specifically, when the user moves the user terminal 500 close to the battery apparatus 120, the antenna 55 of the user terminal 500 is coupled with the antenna 15 of the battery apparatus 120 to apply a load, and thus a communication path is established between the antenna 55 and the antenna 15. This makes it possible for the controller 50 of the user terminal 500 to transmit and receive information to and from the controller 10 of the battery apparatus 120 via the RFID reader-writer 54, the antenna 55, the antenna 15, and the RFID tag 20.
When the communication path is established between the controller 50 of the user terminal 500 and the controller 10 of the battery apparatus 120, the controller 50 transmits the generated command to the controller 10 via the established communication path.

(Step S601)

On the other hand, the battery apparatus 120 monitors the use condition of the battery 7 and stores the use condition or state of the battery 7 in the storage unit 13 previously as a history.

(Step S602)

The controller 10 of the battery apparatus 120 acquires the command transmitted from the user terminal 500 via the established communication path. The controller 10 executes the acquired command, and thus the controller 10 extracts information relating to the battery 7 specified by the command from the storage unit 13 and transmits the extracted information to the user terminal 500 via the established communication path. The information relating to the battery 7 may be changed as appropriate depending on the operation to be performed by the controller 10 that transmits the information to the user terminal 500.

(Step S505)

The controller 50 of the user terminal 500 acquires the information relating to the battery 7, which is transmitted from the battery apparatus 120 via the established communication path.
The controller 50 decides the operation specification of the battery 7, based on the result obtained by discriminating the user, the position information of the battery apparatus 120, and the information relating to the battery 7 acquired from the battery apparatus 120. Examples of the operation specification of the battery 7 include a maximum value of electric current outputted from the battery 7, a time limit, an available amount of power, and information indicating a condition to limit the output power of the battery 7. Examples of the information indicating a condition to limit the output power of the battery 7 include a reference used to determine whether the user is subjected to dangerous driving, the number of times the driving is determined to be dangerous, such as the number of times of sudden acceleration and the number of times of excess of the speed regulation.
As a specific example, the controller 50 may specify the speed regulation in the environment indicated by the position information of the battery apparatus 120 based on the position information, and may set a reference relating to the speed of the electric cart based on the specified speed regulation. The reference relating to the speed of the electric cart is used to determine whether the user is subjected to dangerous driving.
The condition described above is merely an example. The setting of a condition used to limit the output power of the battery 7 depending on a based condition may be changed as appropriate depending on operation. For example, as another example, the controller 50 discriminates whether the user is a child or an adult based on the age of the discriminated user, and may decide the condition used to limit the output power of the battery 7 depending on the discrimination result.
The controller 50 generates a command used to update the control data in the battery apparatus 120, and thus controls the operation of the battery 7 depending on the decided specification.

(Step S506)

When the command is generated, the controller 50 transmits the generated command to the controller 10 via the established communication path.

(Step S603)

The controller 10 of the battery apparatus 120 acquires the command transmitted from the user terminal 500 via the established communication path. The controller 10 executes the acquired command and then updates the control data stored in the storage unit 13 so that the battery 7 operates based on the specification decided by the user terminal 500. This allows the maximum value of electric current outputted from the battery 7, the time limit, the available amount of power, and the information indicating a condition to limit the output power of the battery 7 to be set in the battery apparatus 120.
The controller 10 controls the discharging control FET 6 of the switch circuit 4 by executing the command, and thus the controller 10 may generate a command to start the discharging from the battery 7 to the connection device 410 (in this case, an electric cart).

(Step S604)

When the setting on the operation specification of the battery 7 is completed by executing the command, the control information 10 notifies the user terminal 500 of completion of the setting via the established communication path.

(Step S507)

The controller 50 of the user terminal 500 receives a notification indicating that the setting is completed from the battery apparatus 120 via the established communication path. The controller 50, when receiving the notification from the battery apparatus 120, causes the display unit 59 to display a message for notifying that the setting (i.e. setting of the amount of assist) of the battery apparatus 120 is completed, and terminates the series of processes.

(Step S605)

When the setting on the operation specification of the battery 7 is completed and the discharging from the battery 7 is started, the controller 10 monitors the operation of the battery 7 (e.g., a use condition of the battery 7). As a specific example, the controller 10 may monitor the time elapsed from start of discharging from the battery 7, power consumption, the number of driving times, and maximum output power.

(Step S606)

The controller 10 determines whether the user is subjected to dangerous driving depending on whether the condition used to limit the output power of the battery 7 is satisfied based on the result obtained by monitoring the operation of the battery 7. As a specific example, the controller 10 may determine whether the user is subjected to dangerous driving depending on whether the power outputted from the battery 7 exceeds a threshold that is set as a condition used to limit the output power of the battery 7.

The controller 10 continues to monitor without limiting the output power from the battery 7, as long as the number of times or duration where the user is determined to be subjected to dangerous driving does not exceed the number of times or duration that is set as a condition used to limit the output power of the battery 7 (NO in step S606).

(Step S607)

If the number of times or duration where the user is determined to be subjected to dangerous driving exceeds the number of times or duration that is set as a condition used to limit the output power of the battery 7 (YES in step S606), for example, the controller 10 may limit the output power from the battery 7. As a specific example, the controller 10 allows a sudden acceleration of the electric cart to be prevented by lowering the upper limit value of the output power from the battery 7. In addition, the controller 10 may reduce the maximum speed of the electric cart by lowering the upper limit value of the output power from the battery 7.

(Step S608)

The controller 10 continues to monitor the operation of the battery 7 and to control corresponding to the result obtained by monitoring (e.g., to limit the output power of the battery 7 when a predetermined condition is satisfied) as described above until the series of operations of the electric cart is stopped (step S608). When the series of operations of the electric cart are stopped, the series of operations of the battery apparatus 120 also are stopped.

As described above, the battery apparatus 120 according to Example 3 estimates the operation of the electric cart by monitoring a change in the output power from the battery 7. If it is determined that the user is subjected to dangerous driving based on the estimation result, the battery apparatus 120 according to Example 3 limits the output power from the battery 7. This makes it possible for the battery apparatus 120 itself to monitor a driving condition of the user and to limit the output power from the battery 7 without monitoring by an administrator the driving condition of the user one by one even in the situation where an electric cart is to be rented.

<7. Example 4 (example of control relating to output of battery information)>

In Example 1 described above, the description has been given of the case where the information relating to the battery 7 stored in the battery apparatus 120 is outputted to the user terminal 500. On the other hand, the information stored in the battery apparatus 120 may contain, for example, information for general use such as a remaining amount of power charged in the battery 7 (hereinafter, sometimes refer to as "remaining battery capacity") or information, such as detailed control information, referred by the user who has a special role such as a service man or administrator. An attribute may be set as a reference used to classify a general user (hereinafter, sometimes refer to as "general user") and a user such as a service man or administrator (hereinafter, sometimes refer to as "administrator user"). Then, the users may be distinguished by classifying users depending on the attribute for each user. In this case, it is also possible to control the information to be outputted depending on the attribute to which the discriminated user belongs. Thus, in Example 4, a description will be given of a case where the battery apparatus 120 controls the information to be outputted to the user terminal 500 depending on the attribute to which the discriminated user belongs based on the authentication result.

For example, when the user, which is discriminated based on the authentication result, belongs to a general user's attribute, the battery apparatus 120 may output only the remaining battery capacity to the user terminal 500. When the user, which is discriminated based on the authentication result, belongs to the attribute of the administrator user, the battery apparatus 120 may output detailed information such as the degree of deterioration or electric current value of the battery. In this case, the control data indicating what attribute each user belongs (hereinafter, sometimes refer to as "user management table") and the control data indicating information to be outputted for each attribute (hereinafter, sometimes refer to as "information management table") are previously stored in the storage unit 13 of the battery apparatus 120.

The user terminal 500 transmits the user management table to the battery apparatus 120, and thus the controller 10 may update the user management table stored in the storage unit 13 with the user management table acquired from the user terminal 500. Such update may be similarly applicable to the information management table.

When the controller 50 of the user terminal 500 instructs the battery apparatus 120 to transmit the information relating to the battery 7, the controller 50 transmits the information indicative of the discriminated user to the controller 10 of the battery apparatus 120.

The controller 10 specifies the attribute of the user based on the information indicative of the user acquired from the controller 50 and the user management table. When the attribute of the user is specified, the control information 50 specifies the information to be outputted to the user terminal 500 based on the specified attribute and the information management table. In this case, when the attribute of the user is the general user, the controller 10 specifies the information indicative of the remaining battery capacity as the information to be outputted to the user terminal 500. When the attribute of the user is the administrator user, the controller 10 specifies the detailed information such as the degree of deterioration or electric current value of the battery as the information to be outputted to the user terminal 500.

The controller 10 reads out the information specified depending on the user's attribute from the storage unit 13 and transmits the read out information to the user terminal 500. This allows the information corresponding to the user's attribute to be displayed on the display unit 59 of the user terminal 500.

In the example described above, the controller 10 of the battery apparatus 120 specifies an attribute and information to be outputted. However, the user terminal 500 may specify an attribute and information to be outputted. In this case, the user management table and the information management table are stored in the user terminal 500. The controller 50 of the user terminal 500 may specify information to be acquired depending on user's attribute based on the user management table and the information management table, and may instruct the controller 10 of the battery apparatus 120 to output the specified information.

As described above, the battery apparatus according to Example 4 of the present disclosure makes it possible to specify an attribute to which the user discriminated based on the authentication result belongs and to control information to be outputted from the battery apparatus 120 to the user terminal 500 depending on the specified attribute.

<8. Example 5 (example of battery output control)>

In Example 1 described above, the description has been given of the case where the user using the battery apparatus 120 is discriminated depending on the result by authenticating the user, the operation specification of the battery 7 is decided depending on the discrimination result, and the operation of the battery 7 is controlled based on the decided specification. In Example 5, a description will be given of another example of the case where the operation specification of the battery 7 is decided depending on the result obtained by discriminating the user and the operation of the battery 7 is controlled based on the decided specification.

As a specific example, the specification of the battery apparatus 120 may be limited depending on whether the authenticated user is registered in advance (hereinafter, sometimes refer to as "registered user") (for example, whether the user is a member), based on the result obtained by authenticating the user. The determination of whether the authenticated user is the registered user may be performed by the controller 50 of the user terminal 500 or performed by the controller 10 of the battery apparatus 120, which is similar to Example 1. In this case, for example, when the authenticated user is not a registered user, the controller 10 may limit or stop the discharging from the battery 7.

As a specific example, the discharging control FET 6 of the switch circuit 4 in the battery apparatus 120 is set to OFF in the initial state. Then, the controller 10 may make the battery apparatus 120 to be available by setting the discharging control FET 6 to ON when the authenticated user is registered. Such operation of the battery apparatus 120 can prevent non-registered users from using the battery apparatus 120.

When the battery apparatus 120 is available, the controller 10 may store a use condition of the battery 7 in the storage unit 13 as a history. This makes it possible to read the history stored in the storage unit 13, for example, when the registered user stops use of the battery apparatus 120, thereby billing the user depending on the use condition.

Even when the authenticated user is the registered user, the use of the battery apparatus 120 may be limited or prohibited depending on a use condition of the battery apparatus 120. For example, the battery apparatus 120 may limit the period in which the battery apparatus 120 is available as described in Example 2.

As another example, when the control information indicative of an available amount of power is transmitted to the battery apparatus 120 and the total amount of power discharged from the battery 7 exceeds the available amount of power, the battery apparatus 120 may limit or prohibit the use of the battery apparatus 120. In this case, the controller 10 of the battery apparatus 120 may monitor an amount of power discharged from the battery 7. When the total amount of the discharged power exceeds the available amount of power, the controller 10 may prohibit the use of the battery apparatus 120 by setting the discharging control FET 6 to OFF.

The battery apparatus 120 may limit or prohibit the use of the battery apparatus 120, for example, depending on the number of times in which the connection device 410 is driven in association with the power supply from the battery 7, in addition to the amount of power. In this case, the controller 10 may monitor, for example, the number of times in which the state where the discharging from the battery 7 is stopped is switched into the state where the discharging is started.

The battery apparatus 120 may limit or prohibit the use of the battery apparatus 120 depending on the state of the battery 7. As a specific example, the controller 10 may limit or prohibit the discharging from the battery 7 if the over-discharging is expected based on the result obtained by monitoring the battery 7.

As described above, in Example 5, the description has been given of the case where the use of the battery apparatus 120 is limited or prohibited depending on whether the user using the battery apparatus 120 is the registered user. In this way, the control of the battery 7 by the controller 10 may be used, for example, as a crime prevention function by prohibiting (or limiting) the use of the battery apparatus 120 depending on whether the user using the battery apparatus 120 is the registered user.

Furthermore, the control of the battery 7 by the controller 10 may be used, for example, in a situation where the battery apparatus 120 is to be rented, by limiting or prohibiting the use of the battery apparatus 120 depending on whether the use condition of the battery 7. As a specific example, a condition (e.g., time limit, power consumption, and number of driving time) in which the battery apparatus 120 is available depending on billing may be previously set. When the condition depending on the use condition is not satisfied, the use of the battery apparatus 120 may be limited or prohibited.

<9. Example 6 (example of charging control)>

In Example 5 described above, the description has been given of the case where the discharging from the battery 7 is controlled, but the charging to the battery 7 is also possible. Thus, in Example 6, a description will be given of a case where the specification of charging to the battery 7 is decided depending on the result obtained by discriminating the user and the charging to the battery 7 is controlled based on the decided specification.

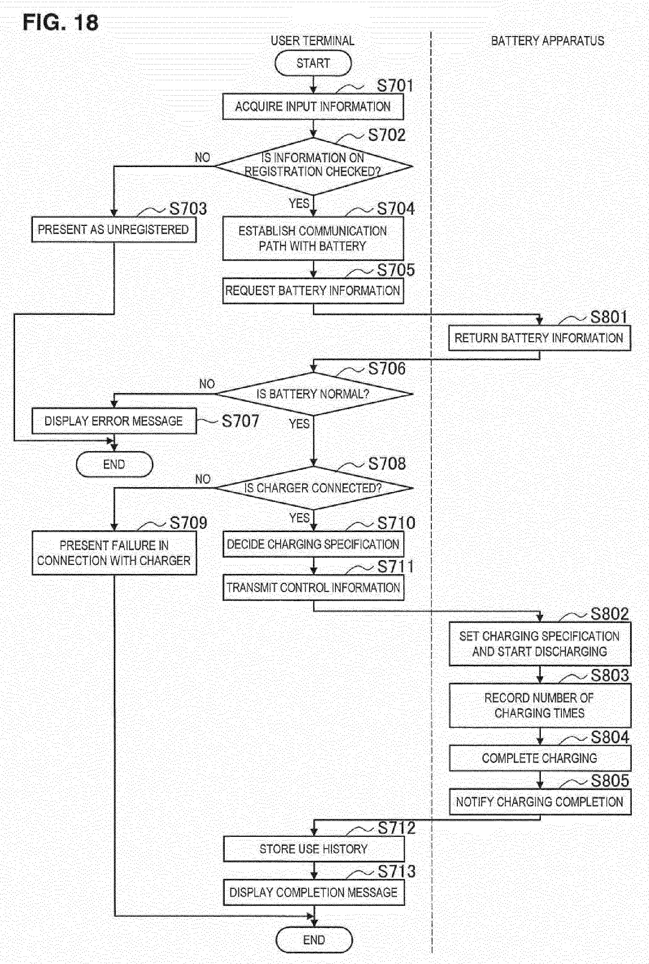

Referring to FIG. 18, an example of a series of operations of the battery 7 when the charging to the battery 7 is controlled will be described. FIG. 18 is a flowchart illustrating a series of operations of the battery apparatus 120 according to Example 6 of the present disclosure, and illustrates an example of a case where the charging to the battery 7 is controlled.

(Step S701)

The controller 50 of the user terminal 500 acquires authentication information, which is inputted by a user through the input unit 57 and is used to authenticate the user using the battery apparatus 120, and acquires information indicative of a time for receiving power or an amount of charging power.

(Step S702)

The controller 50 performs authentication based on the acquired authentication information and discriminates whether the user is a previously registered user (hereinafter, sometimes refer to as "registered user") depending on the authentication result.

(Step S703)

If the discriminated user is not a registered user (NO in step S703), the controller 50 causes the display unit 59 to display a message for notifying that the user is not a registered user, and terminates the series of processes.

(Step S704)

If the discriminated user is a registered user (YES in step S703), the controller 50 establishes a communication path with the battery apparatus 120. Specifically, when the user moves the user terminal 500 close to the battery apparatus 120, the antenna 55 of the user terminal 500 is coupled with the antenna 15 of the battery apparatus 120 to apply a load, and thus a communication path is established between the antenna 55 and the antenna 15. This makes it possible for the controller 50 of the user terminal 500 to transmit and receive information to and from the controller 10 of the battery apparatus 120 via the RFID reader-writer 54, the antenna 55, the antenna 15, and the RFID tag 20.

(Step S705)

When the communication path is established between the controller 50 of the user terminal 500 and the controller 10 of the battery apparatus 120, the controller 50 transmits control information, which is used to instruct to transmit information relating to the battery 7 and information relating to the connection device 401 (i.e. charger), to the controller 10 via the established communication path.

(Step S801)

The controller 10 of the battery apparatus 120 acquires the control information transmitted from the user terminal 50 via the established communication path. The controller 10 recognizes the instruction on the transmission of information relating to the battery 7 from the controller 50 based on the acquired control information.

The controller 10 reads out information relating to the battery 7 stored in the storage unit 13 and information relating to the connection device 410, and transmits the read out information to the user terminal 500 via the established communication path, based on the instruction from the controller 50. As the information relating to the battery 7, the determination of what information is transmitted from the controller 10 to the user terminal 500 may be performed based on a similar idea to the case of Example 1 or may be changed as appropriate depending on operations. When the connection device 410 is not connected properly to the battery apparatus 120 and the information relating to the connection device 410 is not allowed to be acquired, the controller 50 may notify the user terminal 500 that the connection device 410 is not connected properly as the information relating to the connection device 410.

(Step S706)

The controller 50 of the user terminal 500 acquires the information relating to the battery 7, which is transmitted from the battery apparatus 120 via the established communication path. The controller 50 analyzes the acquired information relating to the battery 7 and determines whether the battery apparatus 120 is chargeable properly.

Methods of determining contents of information relating to the battery 7 or determining whether the battery apparatus 120 performs normal charging based on information relating to the battery 7 are not limited as long as it is possible to determine whether the battery apparatus 120 performs normal charging.

(Step S707)

If it is determined that the battery apparatus 120 is difficult to perform normal charging based on the acquired information relating to the battery 7 (NO in step S707), the controller 50 causes the display unit 59 to display an error message and terminates the series of processes.

(Step S708)

Then, the controller 50 determines whether a charger is properly connected to the battery apparatus 120 based on the acquired information relating to the connection device 410 (i.e. a charger).

(Step S709)

If the charger is not properly connected to the battery apparatus 120 (NO in step S709), the controller 50 causes the display unit 59 to display a message for notifying that the charger is not properly connected, and terminates the series of processes.

(Step S710)

If the charger is properly connected to the battery apparatus 120 (YES in step S709), the controller 50 decides the specification relating to the charging to the battery 7 (hereinafter, sometimes refer to as "charging specification") based on the result obtained by discriminating the user and the information relating to the battery 7. As a specific example, when a fee for the charged power is charged, the controller 50 may specify the billing condition of the user based on the result obtained by discriminating the user, and may decide a condition to limit or stop the charging depending on the specified billing condition. An example of the condition to limit or stop charging includes a charging time, an amount of chargeable power, or a number of charging times. The controller 50 recognizes the state of the battery 7 based on the acquired information relating to the battery 7 and may limit the charging power or charging current depending on the recognized state of the battery 7.

(Step S711)

When the charging specification is decided, the controller 50 transmits control information that contains the decided charging specification to the controller 10 via the established communication path.

(Step S802)

The controller 10 acquires the control information transmitted from the user terminal 500 via the established communication path. The controller 10 extracts information indicative of the charging specification decided by the user terminal 500 from the acquired control information.

The controller 10 updates the control data used to control the charging to the battery 7 based on the information indicative of the charging specification extracted from the control information. As a specific example, the controller 10 may control the upper limit value of the charging current to the battery 7 based on the information indicative of the charging specification extracted from the control information.

(Step S803)

When the control data is updated based on the extracted information indicative of the charging specification, the controller 10 controls the charging control FET 5 of the switch circuit 4 to start charging to the battery 7 from the connection device 410 (in this case, a charger).

(Step S804)

When charging is started, the controller 10 records the number of charging times in the storage unit 13. If the number of charging times is recorded previously, the controller 10 may add the number of charging times recorded in the storage unit 13. In this case, when the number of charging times is set as a condition to limit or stop charging, the controller 10 may discriminate whether the number of charging times recorded in the storage unit 13 satisfies a condition to limit or stop charging. If the number of charging times satisfies a condition to limit or stop charging, the controller 50 controls the charging control FET 5 of the switch circuit 4 to limit or stop charging to the battery 7 from the connection device 410 (in this case, a charger).

The controller 10 may start to measure the time elapsed from the start of charging (hereinafter, sometimes refer to as "charging time"). For example, the controller 10 discriminates whether the measured charging time exceeds the charging time set as a condition to limit or stop charging, and may limit or stop charging to the battery 7 depending on the discrimination result.

The controller 50 may monitor an amount of power charged to the battery 7. For example, the controller 10 discriminates whether the amount of power charged to the battery 7 exceeds the amount of chargeable power set as a condition to limit or stop charging, and may limit or stop charging to the battery 7 depending on the discrimination result.

(Step S805)

When the amount of power charged to the battery 7 exceeds a threshold (i.e. if charging is completed), the controller 10 stops charging to the battery 7 from the connection device 410 (in this case, a charger) by controlling the charging control FET 5 of the switch circuit 4.

(Step S712)

When the charging to the battery 7 is stopped, the controller 10 notifies the user terminal 500 that the charging to the battery 7 is completed via the established communication path.

(Step S713)

The controller 50 of the user terminal 500 receives the notification that the charging to the battery 7 is completed from the battery apparatus 120 via the established communication path. The controller 50, when receiving the notification from the battery apparatus 120, causes the display unit 59 to display a message for notifying that the charging to the battery 7 is completed, and terminates the series of processes.

When charging to the battery 7 is started, the control information 10 may monitor a charging condition to the battery 7 and may store the charging condition in the storage unit 13 as a history. This makes it possible for an administrator of the battery apparatus 120 to read the history stored in the storage unit 13, for example, when the registered user completes the charging to the battery apparatus 120, thereby billing the user depending on the read history.

As described above, in Example 6, the description has been given of the case where charging to the battery apparatus 120 is limited or prohibited depending on whether the user using the battery apparatus 120 is the registered user. In this way, the control of the battery 7 by the controller 10 may be used, for example, as a crime prevention function by prohibiting (or limiting) charging to the battery apparatus 120 depending on whether the user using the battery apparatus 120 is the registered user.

The control of the battery 7 by the controller 10 may be used, for example, to operate a charging station for charging the battery apparatus 120, by limiting or prohibiting charging to the battery apparatus 120 depending on the charging condition of the battery 7. As a specific example, a condition (e.g., charging time, amount of charging power, and number of charging times) in which the battery apparatus 120 is chargeable depending on the billing may be previously set. When the condition depending on a use condition is not satisfied, the charging to the battery apparatus 120 may be limited or prohibited.

It is possible to control the charging to the battery 7 by the battery apparatus 120, and thus it is not necessary to perform a complicated process by a charging station, thereby simplifying the structure of the charging station.

In the above, the description has been given of the case where the charging to the battery apparatus 120 is permitted when the user is a registered user. However, if the remaining amount of the battery 7 falls below a threshold that is previously set, emergency charging may be performed without authentication of the user. In this case, the controller 10 may limit the user of battery apparatus 120, for example, by allowing charging to a fixed level such as 10% of the total amount of power of the battery 7.

<10. Example 7 (example of control to limit type of devices available)>

In recent years, the shapes of battery or methods of connecting batteries have been common and it has been possible to connect batteries to various devices. On the other hand, there is a demand to limit the type of devices that can use a battery. Thus, in Example 7, a description will be given of a case where the battery apparatus 120 discriminates the type of the connection device 410 connected to the battery apparatus 120 and limits discharging from the battery 7 or charging to the battery 7 depending on the discrimination result.

The description will be given of a mechanism in which the battery apparatus 120 discriminates the type of the connection device 410 and limits discharging from the battery 7 or charging to the battery 7 depending on the discrimination result.

The controller 10 of the battery apparatus 120 may acquire information of the connection device via a leased line (e.g., a serial cable) for transmitting and receiving information with to and from the connection device 140, and may store the acquired information in the storage unit 13. When a power-line communication with the connection device 410 is possible, as is the case with the battery apparatus 110 according to the second embodiment or the battery apparatus 120 according to the third embodiment, the controller 10 may acquire information of the connection device 410 via the power line.

When the information of the connection device 410 is acquired, the controller 10 discriminates the connection device 410 based on the acquired information and determines whether discharging from the battery 7 or charging to the battery 7 is permitted depending on the discriminated result. The controller 10 may perform determination on the connection device 410, based on the list of devices that permit discharging from the battery 7 or charging to the battery 7 (hereinafter, sometimes refer to as "permission list"), which is previously stored. As another example, the controller 10 may perform determination on the connection device 410, based on the list of devices that prohibit discharging from the battery 7 or charging to the battery 7 (hereinafter, sometimes refer to as "prohibition list"), which is previously stored.

The permission list or the prohibition list may be transmitted from the user terminal 500 to the controller 10 in the battery apparatus 120, based on the communication between the user terminal 500 and the battery apparatus 120 as described above. In this case, the controller 10 may store the permission list or the prohibition list acquired from the user terminal 500, for example, in the storage unit 13, and may read it from the storage unit 13 as appropriate.

The controller 10 may store the acquired information of the connection device 410 in the storage unit 13 and notify the user terminal 500 of the information of the connection device 410 stored in the storage unit 13. This makes it possible for the user to acquire the information of the connection device 410 from the battery apparatus 120 through the user terminal 500 thereby specifying the connection device 410 connected to the battery apparatus 120, even after the connection device 410 is removed from the battery apparatus 120.

As described above, the battery apparatus 120 according to Example 7 of the present disclosure makes it possible to discriminate the type of the connection device 410 connected to the battery apparatus 120 and to limit discharging from the battery 7 or charging to the battery 7 depending on the discrimination result.

Thus, by previously deciding an available device for each battery, for example, when the specification according to discharging from the battery does not match a device connected to the battery, it is possible to limit a use of battery, thereby ensuring safety.

The controller 10 may control the discharging from the battery 7 or charging to the battery 7 based on the result obtained by discriminating the user described in the above example and the result obtained by discriminating the connection device 410. As a specific example, the controller 10 stores a permission list for each user previously, and may control the discharging from the battery 7 or charging to the battery 7 depending on whether the discriminated connection device 410 is included in the permission list of the discriminated user. In this way, for example, the permission list is created depending on whether each user receives training of each connection device 410, and the created permission list is stored in the battery apparatus 120, thus it is possible to set a limitation to use only device in which the user receives training.

<11. Example 8 (example of application to automotive battery)>

As Example 8, a description will be given of an example of a case of applying the battery apparatus 120 as a battery for automobiles.

The automotive battery is often placed in a location out of reach from the driver's seat such as in the engine compartment. Thus, in some cases, a measuring instrument for checking the amount of power charged in the battery is installed as an instrument panel, as is the case with a speedometer or tachometer. However, in many cases, the checking by measuring instruments installed as an instrument panel is possible only if the engine is started. Thus, when a battery supplies power in a situation in which the engine is not started, such as a camper, there is a case in which the amount of power charged in the battery is difficult to be checked.

Thus, in Example 8, a description will be given of a configuration that can check information of a battery by a simple means without starting an engine using the battery apparatus 120 (or the battery apparatus 110) that can communicate with the connection device 410 via the power line PL.

Specifically, a cigarette lighter receptacle of an automobile is connected to a device in which the antenna 15 is connected to a power line in the connection device 410 via the coupling circuit (filter) 46. Some cigarette lighter receptacles of automobiles may be supplied with power even when the engine is stopped. Thus, electrical connection of the battery apparatus 120 with the connection device 410 through a cigarette lighter receptacle makes it possible to use the power line PL of the battery apparatus 120 and the power line of the connection device 410 as a repeater. In other words, the user moves the user terminal 500 close to the antenna 15 of the connection device 410 connected to the cigarette lighter receptacle, thereby easily read the information (e.g., remaining capacity or use history of battery) stored in the battery apparatus 120.

An example of the connection device 410 to be connected to the cigarette lighter receptacle includes a device in which the antenna 15 is connected to a power line via the coupling circuit 46, without having configuration corresponding to the device 40. This power line is electrically connected to the power line PL of the battery apparatus 120 through the cigarette lighter receptacle.

When there is a connector to supply power from an automotive battery in addition to the cigarette lighter receptacle, this connector may be connected to the connection device 410 provided with the antenna 15.

As described above, the battery apparatus 120 according to Example 8 of the present disclosure makes it possible to easily read information relating to a battery, such as remaining capacity or use history of the battery, through an antenna connected to a cigarette lighter receptacle without opening a hood.

<12. Example 9 (example of estimating and specifying driven device)>

In Example 7 described above, the description has been given of the example of specifying the connection device 410 connected to the battery apparatus 120 by acquiring information relating to the connection device 410 stored in the battery apparatus 120 through the user terminal 500. However, the information is not necessarily acquired from the connection device 410. In Example 9, a description will be given of a case where the battery apparatus 120 stores a use condition of the battery 7 as a history and a driven device (i.e. connection device 410) driven by the battery apparatus 120 is estimated or specified based on the history stored in the battery apparatus 120.

Taking an electric tool as an example, there are various tools, such as electric drill, electric chain saw, and mower, and their operations are different. Different operations cause the use conditions of the battery 7 to be different. Specifically, when driving is performed by the power supplied from the battery 7, the current consumption, power consumption, voltage variation, and power harmonic signal, or variation value for each time of these values are often different.

Thus, in the present embodiment, the controller 10 of the battery apparatus 120, for example, monitors the current consumption, power consumption, voltage variation, power harmonic signal, and time information, and stores each information item in the storage unit 13 as a history. The history including current consumption, power consumption, voltage variation, power harmonic signal, and time information stored in the storage unit 13 is acquired from the battery apparatus 120 by the user terminal 500.

The user terminal 500 previously creates and stores an output pattern based on current consumption, power consumption, voltage variation, power harmonic signal, and time information for each type of the connection device 410. This makes it possible for the user terminal 500 to create an output pattern based on the history acquired form the battery apparatus 120 and to compare the created output pattern with an output pattern stored for each type of the connection device 410, thereby estimating or specifying the connection device 410.

The comparing of the output pattern created based on the history acquired from the battery apparatus 120 with the output pattern stored for each type may be performed by an external service such as a cloud server or center (e.g., data center) instead of the user terminal 500. In this case, the external service previously creates and stores an output pattern based on current consumption, power consumption, voltage variation, power harmonic signal, and time information for each type of the connection device 410. The user terminal 500 may notify the external service of the history acquired from the battery apparatus 120. The external service creates an output pattern based on the history notified from the user terminal 500 and compares the created output pattern with the output pattern stored for each type of the connection device 410, thereby estimating or specifying the connection device 410. In this way, an external service such as a cloud server or center gathers the histories acquired from the battery apparatus 120 or compares between output patterns, and thus it is possible to obtain statistics of output patterns based on the history of each battery apparatus 120 gathered between different user terminals 500.

The type and combination of information stored as a history of a use condition described above are only an example. The type and combination of information stored as a history are not limited, as long as the controller 10 can monitor the state and the type of the connection device 410 can be estimated or specified based on information obtained by monitoring.

Moreover, in the above, the user terminal 500 estimates or specifies the connection device 410, but the controller 10 may estimate or specify the connection device 410. In this case, a program or control data used to estimate or specify the connection device 410 may be previously stored in the storage unit 13.

As described above, the battery apparatus 120 according to Example 9 of the present disclosure makes it possible to estimate or specify a driven device (i.e. connection device 410) driven by the battery apparatus 120, based on the history of use conditions stored in the battery apparatus 120.

<13. Example 10 (example of estimating and specifying contents of work)>

In Example 9, a driven device that is driven by the battery apparatus 120 is estimated or specified, based on the history of use conditions stored in the battery apparatus 120. On the other hand, it is also possible to estimate or specify contents of work performed by the connection device 410 connected to the battery apparatus 120 based on the history of use conditions stored in the battery apparatus 120. Thus, in Example 10, a description will be given of a case where contents of work performed by the connection device 410 connected to the battery apparatus 120 are estimated or specified, based on the history of use conditions stored in the battery apparatus 120.

For example, when an electric drill is used as the connection device 410, the controller 10 monitors the discharging current and time information, and stores each information item in the storage unit 13 as a history. The history of discharging current and time information stored in the storage unit 13 is acquired from the battery apparatus 120 by the user terminal 500.

Furthermore, the user terminal 500 previously creates and stores an output pattern based on the discharging current and time information when a screw is tightened with the electric drill. This makes it possible for the user terminal 500 to create an output pattern based on the history acquired form the battery apparatus 120 and to compare the created output pattern with an output pattern stored previously, thereby estimating or specifying the number of tightened screws or torque of screw tightening.

An example of the electric drill described above is only an example, and the type of the connection device 410 is not limited. Even when another device is used as the connection device 410, variations in the current consumption, power consumption, voltage variation, and power harmonic signal may be checked for each content of work using the device, and thus an output pattern may be previously created.

As described above, the battery apparatus 120 according to Example 10 of the present disclosure makes it possible to estimate or specify contents of work performed by the connection device 410 connected to the battery apparatus 120, based on the history of use conditions stored in the battery apparatus 120. Thus, for example, in a work site using a given tool, it is possible to estimate contents of work using the tool based on the history of use conditions acquired from the battery apparatus 120 connected to the tool, in other words, contents of work of the user using the tool. That is, it is possible to utilize the result obtained by estimating contents of work based on the history of use conditions acquired from the battery apparatus 120 to improve the production management.

As is the case with Example 9, an external service such as a cloud server or center may collect the histories acquired from the battery apparatus 120 or may compare an output pattern created based on the history acquired from the battery apparatus 120 with an output pattern stored for each type. In this way, an external service such as a cloud server or center gathers the histories acquired from the battery apparatus 120 or compares between output patterns, and thus, for example, it is possible to perform production management for each department or each business office.

The preferred embodiments of the present disclosure have been described above with reference to the accompanying drawings, whilst the present disclosure is not limited to the above examples, of course. A person skilled in the art may find various alterations and modifications within the scope of the appended claims, and it should be understood that they will naturally come under the technical scope of the present disclosure.

Additionally, the present technology may also be configured as below.

(1) A battery apparatus including:

a battery;
a communication unit configured to communicate with an external device; and
a controller configured to control an operation of the battery based on control information pertaining to an operation specification of the battery, the control information being acquired based on a communication performed by the communication unit.

(2) The battery apparatus according to (1),
wherein the control information includes information relating to discharging from the battery, and
wherein the controller controls discharging from the battery based on the control information.
(3) The battery apparatus according to (2),
wherein the information relating to discharging from the battery includes information relating to a condition to stop discharging from the battery, and
wherein the controller stops discharging from the battery when the condition is satisfied.
(4) The battery apparatus according to (2) or (3), including:

a switching unit configured to switch start and stop of discharging from the battery,
wherein the controller controls a switching operation of the switching unit based on the control information.

(5) The battery apparatus according to any one of (2) to (4),
wherein the information relating to discharging from the battery includes information relating to an upper limit of an electric current outputted from the battery, and
wherein the controller controls an electric current outputted from the battery based on the control information.

(6) The battery apparatus according to any one of (1) to (5),
wherein the control information includes information relating to charging to the battery, and
wherein the controller controls charging to the battery based on the control information.

(7) The battery apparatus according to (6),
wherein the information relating to charging to the battery includes information relating to a condition to stop charging to the battery, and
wherein the controller stops charging to the battery when the condition is satisfied.

(8)
The battery apparatus according to (6) or (7), including:

a switching unit configured to switch start and stop of charging to the battery,
wherein the controller controls a switching operation of the switching unit based on the control information.

(9) The battery apparatus according to any one of (6) to (8),
wherein the information relating to charging to the battery includes information relating to an upper limit of an electric current charged to the battery, and
wherein the controller controls a charging electric current charged to the battery based on the control information.

(10) The battery apparatus according to any one of (1) to (9),
wherein the controller discriminates a user based on a result obtained by authenticating the user, decides an operation specification of the battery based on a result obtained by discriminating the user, and controls an operation of the battery based on the decided specification, the result obtained by authenticating the user being acquired based on a communication performed by the communication unit.

(11) The battery apparatus according to (10),
wherein the control information includes the result obtained by authenticating the user, and
wherein the controller discriminates the user based on the authentication result and decides an operation specification of the battery based on a result obtained by the discrimination.

(12) The battery apparatus according to (10),
wherein the control information includes authentication information used to authenticate the user, and

wherein the controller authenticates the user based on the authentication information, discriminates the user based on a result obtained by the authentication, and decides an operation specification of the battery based on a result obtained by the discrimination.

(13) The battery apparatus according to any one of (10) to (12),
wherein the controller discriminates to which of predetermined attributes the user belongs based on the authentication result and decides an operation specification of the battery based on the discriminated attribute.

(14) The battery apparatus according to any one of (1) to (13),
wherein the control information includes position information of the battery, and
wherein the controller decides an operation specification of the battery based on the position information and controls an operation of the battery based on the decided specification.

(15) The battery apparatus according to any one of (1) to (14),
wherein the controller acquires identification information of a connection device connected to the battery from the connection device, discriminates the connection device based on the acquired identification information, and controls an operation of the battery based on a result obtained by discriminating the connection device.

(16) The battery apparatus according to any one of (1) to (15),
wherein the controller outputs at least one of information relating to the battery and information relating to a device connected to the battery to the external device via the communication unit.

(17) The battery apparatus according to any one of (1) to (16),
wherein the communication unit communicates in a non-contact manner with the external device via an antenna using a carrier wave signal of a predetermined frequency.

(18)
The battery apparatus according to (17), including:

the antenna.

(19) The battery apparatus according to (17),
wherein a device connected to the battery via a power line includes the antenna, and
wherein the communication unit communicates with the external device via the power line and the antenna included in the device.

(20) The battery apparatus according to (19),
wherein the communication unit obtains electric power from a signal received via the antenna, is driven by the obtained electric power, and communicates with the device via the power line by load modulation using the signal.

Reference Signs List

| | |
|---|---|
| 100, 110, 120 | battery apparatus |
| 1 | positive terminal |
| 2 | minus terminal |
| 4 | switch circuit |
| 7 | battery |
| 9 | current sensing resistor |
| 10 | controller |
| 11 | measuring circuit |
| 12 | protection circuit |
| 13 | storage unit |
| 20, 20a, 20b | RFID tag |
| 20c, 20d | RFID reader-writer |
| 15 | antenna |
| 16 | coupling circuit (filter) |
| 410 | connection device |
| 40 | device |
| 46 | coupling circuit (filter) |
| 500 | user terminal |
| 50 | controller |
| 54 | RFID reader-witter |
| 55 | antenna |
| 57 | input unit |
| 59 | display unit |

**Claims**

1. A battery apparatus comprising:

   a battery;
   a communication unit configured to communicate with an external device; and
   a controller configured to control an operation of the battery based on control information pertaining to an operation specification of the battery, the control information being acquired based on a communication performed by the communication unit.

2. The battery apparatus according to claim 1, wherein the control information includes information relating to discharging from the battery, and wherein the controller controls discharging from the battery based on the control information.

3. The battery apparatus according to claim 2, wherein the information relating to discharging from the battery includes information relating to a condition to stop discharging from the battery, and wherein the controller stops discharging from the battery when the condition is satisfied.

4. The battery apparatus according to claim 2, comprising:

   a switching unit configured to switch start and stop of discharging from the battery, wherein the controller controls a switching operation of the switching unit based on the control information.

5. The battery apparatus according to claim 2, wherein the information relating to discharging from the battery includes information relating to an upper limit of an electric current outputted from the battery, and wherein the controller controls an electric current outputted from the battery based on the control information.

6. The battery apparatus according to claim 1, wherein the control information includes information relating to charging to the battery, and wherein the controller controls charging to the battery based on the control information.

7. The battery apparatus according to claim 6, wherein the information relating to charging to the battery includes information relating to a condition to stop charging to the battery, and wherein the controller stops charging to the battery when the condition is satisfied.

8. The battery apparatus according to claim 6, comprising:

   a switching unit configured to switch start and stop of charging to the battery, wherein the controller controls a switching operation of the switching unit based on the control information.

9. The battery apparatus according to claim 6, wherein the information relating to charging to the battery includes information relating to an upper limit of an electric current charged to the battery, and wherein the controller controls a charging electric current charged to the battery based on the control information.

10. The battery apparatus according to claim 1, wherein the controller discriminates a user based on a result obtained by authenticating the user, decides an operation specification of the battery based on a result obtained by discriminating the user, and controls an operation of the battery based on the decided specification, the result obtained by authenticating the user being acquired based on a communication performed by the communication unit.

**11.** The battery apparatus according to claim 10, wherein the control information includes the result obtained by authenticating the user, and wherein the controller discriminates the user based on the authentication result and decides an operation specification of the battery based on a result obtained by the discrimination.

**12.** The battery apparatus according to claim 10, wherein the control information includes authentication information used to authenticate the user, and wherein the controller authenticates the user based on the authentication information, discriminates the user based on a result obtained by the authentication, and decides an operation specification of the battery based on a result obtained by the discrimination.

**13.** The battery apparatus according to claim 10, wherein the controller discriminates to which of predetermined attributes the user belongs based on the authentication result and decides an operation specification of the battery based on the discriminated attribute.

**14.** The battery apparatus according to claim 1, wherein the control information includes position information of the battery, and wherein the controller decides an operation specification of the battery based on the position information and controls an operation of the battery based on the decided specification.

**15.** The battery apparatus according to claim 1, wherein the controller acquires identification information of a connection device connected to the battery from the connection device, discriminates the connection device based on the acquired identification information, and controls an operation of the battery based on a result obtained by discriminating the connection device.

**16.** The battery apparatus according to claim 1, wherein the controller outputs at least one of information relating to the battery and information relating to a device connected to the battery to the external device via the communication unit.

**17.** The battery apparatus according to claim 1, wherein the communication unit communicates in a non-contact manner with the external device via an antenna using a carrier wave signal of a predetermined frequency.

**18.** The battery apparatus according to claim 17, comprising:

the antenna.

**19.** The battery apparatus according to claim 17, wherein a device connected to the battery via a power line includes the antenna, and wherein the communication unit communicates with the external device via the power line and the antenna included in the device.

**20.** The battery apparatus according to claim 19, wherein the communication unit obtains electric power from a signal received via the antenna, is driven by the obtained electric power, and communicates with the device via the power line by load modulation using the signal.

# FIG. 1

**FIG. 2**

## FIG. 3

# FIG. 4

500

INPUT UNIT 57

DISPLAY UNIT 59

CONTROLLER 50

RFID READER-WRITER 54

55

# FIG. 5

54

RFID READER-WRITER

542

DEMODULATOR

540

55

C3

L3

CONTROLLER — 50

# FIG. 6

PL

110 1

16

20a

10

7

COUPLING CIRCUIT (FILTER)

RFID TAG (POWER-LINE COMMUNI-CATION UNIT)

CONTROLLER

BATTERY

PL

2

## FIG. 7

## FIG. 8

# FIG. 9

## FIG. 10

# FIG. 11

# FIG. 12

# FIG. 13

## FIG. 14

# FIG. 15

USER TERMINAL | BATTERY APPARATUS

START

S101
ACQUIRE INPUT INFORMATION

S102
ESTABLISH COMMUNICATION PATH WITH BATTERY

S103
REQUEST BATTERY INFORMATION

S201
RETURN BATTERY INFORMATION

S104
IS BATTERY NORMAL?

NO

YES

S105
DISPLAY ERROR MESSAGE

END

S106
CALCULATE AMOUNT OF ASSIST

S107
TRANSMIT CONTROL INFORMATION

S202
SET AMOUNT OF ASSIST AND START DISCHARGING

S203
NOTIFY SETTING COMPLETION

S108
DISPLAY COMPLETION MESSAGE

END

# FIG. 16

USER TERMINAL | BATTERY APPARATUS

START

**S301**
ACQUIRE INPUT INFORMATION

**S302**
ACQUIRE POSITION INFORMATION

**S303**
IS OUTPUT POWER INCREASE PERMITTED?

NO → 

**S304**
PRESENT NON-PERMISSION ON OUTPUT POWER INCREASE

YES

**S305**
ESTABLISH COMMUNICATION PATH WITH BATTERY

**S306**
REQUEST BATTERY INFORMATON

**S401**
RETURN BATTERY INFORMATION

**S307**
IS BATTERY NORMAL?

NO →

**S308**
DISPLAY ERROR MESSAGE

END

YES

**S309**
CALCULATE UPPER LIMIT VALUE OF OUTPUT POWER

**S310**
TRANSMIT CONTROL INFORMATION

**S402**
SET UPPER LIMIT VALUE OF OUTPUT POWER, START TIMER, AND START DISCHARGING

**S403**
NOTIFY SETTING COMPLETION

**S311**
DISPLAY COMPLETION MESSAGE

END

## FIG. 17

USER TERMINAL | BATTERY APPARATUS

**START**

S501 — ACQUIRE INPUT INFORMATION

STORE BATTERY INFORMATION — S601

S502 — ACQUIRE POSITION INFORMATION

S503 — GENERATE COMMAND

S504 — REQUEST BATTERY INFORMATION

RETURN BATTERY INFORMATION — S602

S505 — CREATE BATTERY SETTING

S506 — TRANSMIT BATTERY SETTING

UPDATE BATTERY SETTING — S603

NOTIFY SETTING COMPLETION — S604

S507 — DISPLAY BATTERY INFORMATION AND SETTING STATE

MONITOR BATTERY OPERATION — S605

S606

IS PREDETERMINED CONDITION SATISFIED? — NO

YES

CHANGE BATTERY SETTING — S607

S608

IS STOP CONDITION SATISFIED? — NO

YES

**END**

## FIG. 18

USER TERMINAL | BATTERY APPARATUS

START

S701 — ACQUIRE INPUT INFORMATION

S702 — IS INFORMATION ON REGISTRATION CHECKED?

NO → S703 PRESENT AS UNREGISTERED

YES → S704 ESTABLISH COMMUNICATION PATH WITH BATTERY

S705 — REQUEST BATTERY INFORMATION

S801 — RETURN BATTERY INFORMATION

S706 — IS BATTERY NORMAL?

NO → DISPLAY ERROR MESSAGE S707

END

YES → S708 IS CHARGER CONNECTED?

NO → S709 PRESENT FAILURE IN CONNECTION WITH CHARGER

YES → S710 DECIDE CHARGING SPECIFICATION

S711 — TRANSMIT CONTROL INFORMATION

S802 — SET CHARGING SPECIFICATION AND START DISCHARGING

S803 — RECORD NUMBER OF CHARGING TIMES

S804 — COMPLETE CHARGING

S805 — NOTIFY CHARGING COMPLETION

S712 — STORE USE HISTORY

S713 — DISPLAY COMPLETION MESSAGE

END

## INTERNATIONAL SEARCH REPORT

| | International application No. |
|---|---|
| | PCT/JP2014/052914 |

### A. CLASSIFICATION OF SUBJECT MATTER
*H02J7/00*(2006.01)i, *H01M10/42*(2006.01)i, *H01M10/44*(2006.01)i, *H02J7/04*(2006.01)i

According to International Patent Classification (IPC) or to both national classification and IPC

### B. FIELDS SEARCHED

Minimum documentation searched (classification system followed by classification symbols)
H02J7/00, H01M10/42, H01M10/44, H02J7/04

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2001-313081 A  (NEC Mobile Energy Corp.),<br>09 November 2001 (09.11.2001),<br>paragraphs [0003] to [0005], [0013], [0023], [0024]<br>(Family: none) | 1-9,16<br>14,15,17,18<br>10-13,19,20 |
| Y | JP 2010-28963 A  (Honda Motor Co., Ltd.),<br>04 February 2010 (04.02.2010),<br>paragraph [0073]<br>(Family: none) | 14 |
| Y | JP 2007-35479 A  (NEC Tokin Tochigi, Ltd.),<br>08 February 2007 (08.02.2007),<br>paragraphs [0012], [0017], [0018]<br>(Family: none) | 15 |

[X] Further documents are listed in the continuation of Box C.  [ ] See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 19 February, 2014 (19.02.14) | 11 March, 2014 (11.03.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/052914

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2006-228490 A  (Sanyo Electric Co., Ltd.), 31 August 2006 (31.08.2006), paragraphs [0017] to [0021]; fig. 2 to 4 (Family: none) | 17,18 |

Form PCT/ISA/210 (continuation of second sheet) (July 2009)

**EP 2 985 854 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5039980 B